# EUROPEAN PATENT APPLICATION

(11) **EP 4 543 095 A1**
(43) Date of publication of application: **23.04.2025**
(21) Application number: 22946321.1
(22) Date of filing: 17.06.2022
(51) Int. Cl.: H04W 52/02

(54) **METHOD AND APPARATUS FOR STOPPING TERMINAL POSITIONING, DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/099601
(87) International publication number: WO 2023/240640

(57) **Abstract**

The present disclosure discloses a method and apparatus for stopping terminal positioning, and a device and a storage medium, and relates to the field of mobile communication. The method comprises: sending notification information to a second network device when a first network device determines that a terminal has stopped sending uplink positioning reference signals; wherein the notification information is used to cause the second network device to decide to stop positioning the terminal. The present disclosure achieves the timely notification of other network devices participating in terminal positioning to stop measuring uplink positioning reference signals of the terminal. It is thus possible to avoid uplink resource waste caused by other network devices participating in terminal positioning reserving corresponding uplink resources for measuring uplink positioning reference signals, and it is likewise possible to avoid processing resource waste and additional power consumption caused by the network devices participating in terminal positioning receiving unnecessary signals.

## Description

### FIELD

The present disclosure relates to a field of mobile communication, and more particularly to a method and an apparatus for stopping positioning a terminal, a device and a storage medium.

### BACKGROUND

The New Radio (NR) of the 5th generation mobile communication technology (5G) introduces a variety of positioning technologies to realize the positioning of the terminal.

In the 5G NR system, the network device configures the uplink positioning reference signal for the terminal by sending the configuration of the uplink positioning reference signal to the terminal. After configuring the uplink positioning reference signal for the terminal, the network device may measure and determine the position of the terminal according to the uplink positioning reference signal sent by the terminal using the configuration of the uplink positioning reference signal.

When the terminal in the radio resource control (RRC) inactive (INACTIVE) state moves from the cell allocating the configuration of the uplink positioning reference signal for the terminal to other cells, or the time alignment (TA) timer of the terminal times out, the uplink positioning reference signal will be stopped from being sent. However, the base station participating in the positioning measurement of the terminal may always measure the uplink positioning reference signal of the terminal, thus resulting in the waste of uplink resources and additional energy consumption of the base station.

### SUMMARY

Embodiments of the present disclosure provide a method and an apparatus for stopping positioning a terminal, a device and a storage medium. The technical scheme is as follows.

According to an aspect of the present disclosure, a method for stopping positioning a terminal is provided, and the method is executed by a first network device, and includes: sending notification information to a second network device in case that the first network device determines that the terminal stops sending an uplink positioning reference signal. The notification information is configured to enable the second network device to decide to stop positioning the terminal.

According to another aspect of the present disclosure, a method for stopping positioning a terminal is provided, and the method is executed by a location management function (LMF) network element, and includes: deciding to stop positioning the terminal according to the notification information. The notification information is sent by a first network device in case that the first network device determines that the terminal stops sending an uplink positioning reference signal.

According to another aspect of the present disclosure, a method for stopping positioning a terminal is provided, and the method is executed by a second base station, and includes: receiving a message for deciding to stop measuring an uplink positioning reference signal sent by the terminal.

According to another aspect of the present disclosure, an apparatus for stopping positioning a terminal is provided, and the apparatus includes: a sending module configured to send notification information to a second network device in case that the apparatus determines that the terminal stops sending an uplink positioning reference signal. The notification information is configured to enable the second network device to decide to stop positioning the terminal.

According to another aspect of the present disclosure, an apparatus for stopping positioning a terminal is provided, and the apparatus includes: a receiving module configured to receive notification information sent by a first network device; and a determining module configured to decide to stop positioning the terminal according to the notification information. The notification information is sent by the first network device in case that the first network device determines that the terminal stops sending an uplink positioning reference signal.

According to another aspect of the present disclosure, an apparatus for stopping positioning a terminal is provided, and the apparatus includes: a receiving module configured to receive a message for deciding to stop measuring an uplink positioning reference signal sent by the terminal.

According to another aspect of the present disclosure, a network device is provided, and includes: a processor; a transceiver connected with the processor; and a memory for storing instructions executable by the processor. The processor is configured to load and execute the executable instructions to realize the methods for stopping positioning the terminal according to the above aspects.

According to another aspect of the present disclosure, a computer-readable storage medium is provided, in which executable instructions are stored, and the executable instructions are loaded and executed by a processor to realize the methods for stopping positioning the terminal according to the above aspects.

According to another aspect of the present disclosure, a chip is provided, and includes a programmable logic circuit and/or program instructions, and the chip is configured to, when running on a computer device, to realize the methods for stopping positioning the terminal according to the above aspects.

According to another aspect of the present disclosure, a computer program product or a computer program is provided, and includes computer instructions stored in a computer-readable storage medium, and a processor reads and executes the computer instructions from the computer-readable storage medium, so that a computer device executes the method for stopping positioning the terminal according to the above aspects.

The technical scheme provided by the present disclosure at least includes the following beneficial effects.

In case that the first network device determines that the terminal stops sending the uplink positioning reference signal, the first network device sends a message for notifying the stop of positioning to the second network device, so as to timely notify other network devices participating in positioning the terminal to stop measuring the uplink positioning reference signal of the terminal, thus avoiding the waste of uplink resources caused by reserving corresponding uplink resources for measuring the uplink positioning reference signal by other network devices participating in positioning the terminal, and also avoiding the waste of processing resources and additional power consumption caused by unnecessary signal reception by the network devices participating in positioning the terminal.

### BRIEF DESCRIPTION OF THE DRAWINGS

In order to explain the technical scheme in the embodiments of the present disclosure more clearly, the drawings needed in the description of the embodiments will be briefly introduced below. Obviously, the drawings in the following description are only some embodiments of the present disclosure. For those ordinary skilled in the art, other drawings may be obtained according to these drawings without creative work.
Fig. 1 is a schematic diagram of an uplink positioning process according to an illustrative embodiment of the present disclosure.
Fig. 2 is a schematic diagram of a communication system according to an illustrative embodiment of the present disclosure.
Fig. 3 is a flow chart of a method for stopping positioning a terminal according to an illustrative embodiment of the present disclosure.
Fig. 4 is a flow chart of a method for stopping positioning a terminal according to an illustrative embodiment of the present disclosure.
Fig. 5 is a flow chart of a method for stopping positioning a terminal according to an illustrative embodiment of the present disclosure.
Fig. 6 is a flow chart of a method for stopping positioning a terminal according to an illustrative embodiment of the present disclosure.
Fig. 7 is a flow chart of a method for stopping positioning a terminal according to an illustrative embodiment of the present disclosure.
Fig. 8 is a flow chart of a method for stopping positioning a terminal according to an illustrative embodiment of the present disclosure.
Fig. 9 is a flow chart of a method for stopping positioning a terminal according to an illustrative embodiment of the present disclosure.
Fig. 10 is a flow chart of a method for stopping positioning a terminal according to an illustrative embodiment of the present disclosure.
Fig. 11 is a flow chart of a method for stopping positioning a terminal according to an illustrative embodiment of the present disclosure.
Fig. 12 is a flow chart of a method for stopping positioning a terminal according to an illustrative embodiment of the present disclosure.
Fig. 13 is a flow chart of a method for stopping positioning a terminal according to an illustrative embodiment of the present disclosure.
Fig. 14 is a flow chart of a method for stopping positioning a terminal according to an illustrative embodiment of the present disclosure.
Fig. 15 is a flow chart of a method for stopping positioning a terminal according to an illustrative embodiment of the present disclosure.
Fig. 16 is a schematic diagram of a process of sending notification information according to an illustrative embodiment of the present disclosure.
Fig. 17 is a flow chart of a method for stopping positioning a terminal according to an illustrative embodiment of the present disclosure.
Fig. 18 is a flow chart of a method for stopping positioning a terminal according to an illustrative embodiment of the present disclosure.
Fig. 19 is a schematic diagram of a process of sending notification information according to an illustrative embodiment of the present disclosure.
Fig. 20 is a flow chart of a method for stopping positioning a terminal according to an illustrative embodiment of the present disclosure.
Fig. 21 is a schematic diagram of a process of sending monitoring information according to an illustrative embodiment of the present disclosure.
Fig. 22 is a block diagram of an apparatus for stopping positioning a terminal according to an illustrative embodiment of the present disclosure.
Fig. 23 is a block diagram of an apparatus for stopping positioning a terminal according to an illustrative embodiment of the present disclosure.
Fig. 24 is a block diagram of an apparatus for stopping positioning a terminal according to an illustrative embodiment of the present disclosure.
Fig. 25 is a schematic diagram of a communication device according to an illustrative embodiment of the present disclosure.

### DETAILED DESCRIPTION

In order to make the purpose, technical scheme and advantages of the present disclosure more clear, the embodiments of the present disclosure will be further described in detail with reference to the accompanying drawings.

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure. Rather, they are merely examples of apparatuses and methods consistent with some aspects of the present disclosure as detailed in the appended claims.

The terms used in the present disclosure are for the purpose of describing specific embodiments only and is not intended to limit the present disclosure. The singular forms "a", "the" and "this" used in the present disclosure and the appended claims are also intended to include the plural forms, unless the context clearly indicates other meaning. It should also be understood that the term "and/or" as used herein refers to and includes any or all possible combinations of one or more associated listed items.

It should be understood that although the terms first, second, third, etc. may be used to describe various information in the present disclosure, such information should not be limited to these terms. These terms are only used to distinguish the same type of information from each other. For example, without departing from the scope of the present disclosure, the first information may also be called the second information, and similarly, the second information may also be called the first information. Depending on the context, the word "if" as used herein may be interpreted as "when" or "while" or "in response to determining".

A variety of positioning technologies are introduced into the 5G NR system to realize the positioning of the terminal. For the uplink positioning technology and the uplink-downlink hybrid positioning technology, the uplink positioning reference signal sent by the terminal to the network device is needed to realize the positioning of the terminal. For example, the uplink positioning reference signal is a sounding reference signal (SRS), and the network device needs to configure the uplink positioning reference signal for the terminal before it may receive the uplink positioning reference signal sent by the terminal. The network device may configure the uplink positioning reference signal for the terminal by sending the configuration of the uplink positioning reference signal to the terminal. The configuration of the uplink positioning reference signal includes time-frequency resources used by the terminal when sending the uplink positioning reference signal.

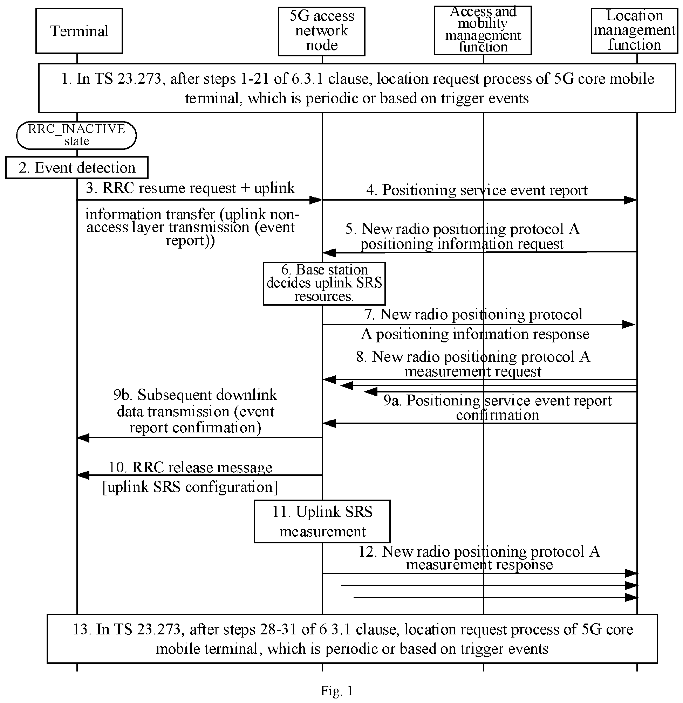

At present, it is supported to position the terminal in a RRC_INACTIVE state. For example, Fig. 1 is a schematic diagram of an uplink positioning process according to an illustrative embodiment of the present disclosure. As shown in Fig. 1, in step 10, the terminal receives an uplink SRS configuration sent by a node (e.g., a base station) of a 5G access network (NG-RAN) through an RRC release message. Then, the terminal stays in the RRC_INACTIVE state and starts to send the SRS to the base station. In addition, all base stations (that is, base stations participating in positioning the terminal) that receive a measurement request of the new radio positioning protocol A (NRPPa) in step 8 begin to receive and measure the SRS sent by the terminal, and feed back a measurement result to a location management function (LMF) network element in step 12.

There is no RRC connection between the terminal and the base station in the RRC_INACTIVE state, and the terminal will release the configuration of the SRS under the following circumstances:
when the terminal moves to other cells in RRC_INACTIVE state, the terminal will stop sending the SRS signal;
when a TA timer of the terminal times out, the terminal will stop sending the SRS.

According to the above circumstances, the base station that allocates SRS resources to the terminal may also monitor that the terminal may release the SRS resources according to the signaling or the timer timeout. However, other base stations participating in the positioning measurement of the terminal will always measure the SRS of the terminal, which will cause the waste of uplink resources and additional energy consumption of the base station.

When the terminal in the RRC_INACTIVE state that is executing the uplink-related positioning process stops sending the SRS due to the cell reselection or the timer timeout, a method according to the embodiment of the present disclosure may realize that the base station participating in positioning may stop receiving and measuring the SRS of the terminal in time after the terminal stops sending the SRS, thus avoiding the waste of uplink resources and unnecessary measurement, thereby reducing the energy consumption of the base station.

In the method according to the embodiment of the present disclosure, when the base station finds that the terminal stops sending the SRS through the signaling or the self-monitoring, it releases the SRS resources in time, and sends a message for notifying the stop of positioning to the LMF network element, so that other base stations participating in the positioning of the terminal may be notified in time to stop measuring the SRS signal of the terminal, and unnecessary measurement is reduced. Moreover, in order to avoid the uplink interference, the base station will not allocate resources with the same time-frequency position as the SRS to other terminals. Through the method according to the embodiment of the present disclosure, the base station does not need to avoid using the uplink resources corresponding to the SRS, thus avoiding the waste of the uplink resource.

In an optional method according to the embodiment of the present disclosure, when starting to position the terminal, the serving base station sends the information for monitoring the stop of measuring the SRS to the LMF network element through the positioning information feedback message, and the LMF network element sends the information to other base stations participating in positioning the terminal through the measurement request message, so that other base stations may consider the information for monitoring the stop of measuring the SRS, so as to judge whether the terminal stops sending the SRS and decide whether to stop measuring the SRS by themselves. In this way, the same effect may be achieved as the above method.

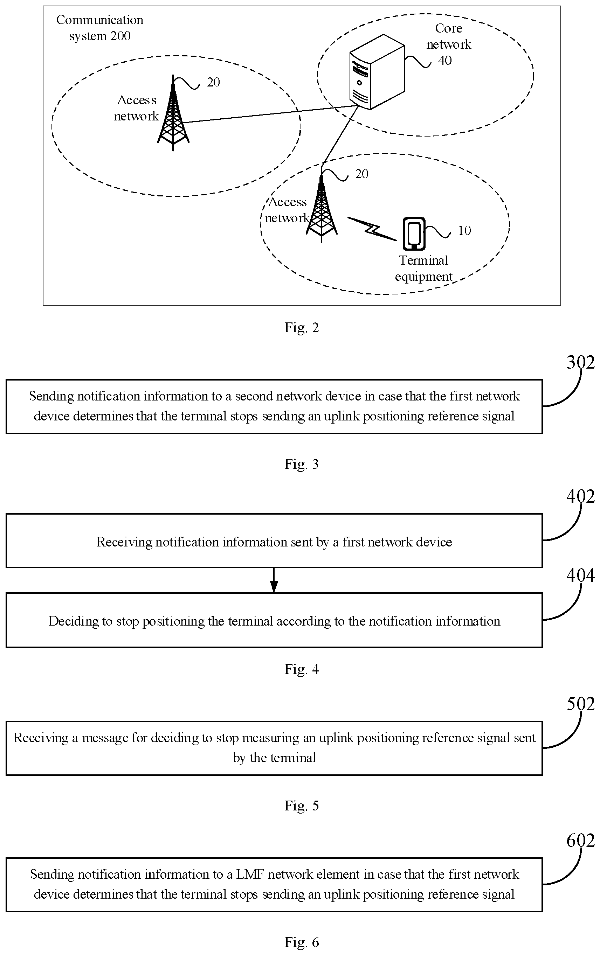

Fig. 2 is a schematic diagram of a communication system according to an illustrative embodiment of the present disclosure. The communication system may include a terminal 10, an access network device 20 and a core network device 30.

A plurality of terminals 10 is usually provided, and one or more terminals 10 may be distributed in a cell managed by each access network device 20. The terminal 10 may include various handheld devices, vehicle-mounted devices, wearable devices, computing devices or other processing devices connected to a wireless modem, which have wireless communication functions, as well as various forms of user equipment (UE), mobile stations (MS) and the like. For convenience of description, in the embodiment of the present disclosure, the above devices are collectively referred to as terminals.

The access network device 20 is an apparatus deployed in an access network to provide a wireless communication function for the terminal 10. The access network device 20 may include various forms of macro base stations, micro base stations, relay stations and access points. In systems with different wireless access technologies, the names of devices with the function of the access network device may be different, for example, in the 5G NR system, it is called gNodeB or gNB. With the evolution of communication technology, the name "access network device" may change. For convenience of description, in the embodiment of the present disclosure, the above apparatuses providing the wireless communication function for the terminal 10 are collectively referred to as the access network devices. A connection may be established between the access network device 20 and the terminal 10 through an air interface, so as to communicate through the connection, including interactions of signaling and data. A plurality of access network devices 20 may be provided, and two adjacent access network devices 20 may also communicate in a wired or wireless manner. The terminal 10 may switch between different access network devices 20, that is, establish connections with different access network devices 20.

The function of the core network device 30 is mainly to provide user connection, user management and service bearing, and serve as a bearer network to provide an interface to an external network. For example, the core network device in the 5G NR system of the embodiment of the present disclosure may include a location management function (LMF) network element, and also may include other entity devices. The access network device 20 and the core network device 30 may be collectively referred to as network devices. The core network device 30 and the access network device 20 communicate with each other through a certain over-the-air technology, and a communication relationship may be established between the terminal 10 and the core network device 30 through the access network device 20.

The "5G NR system" in the embodiment of the present disclosure may also be called a 5G system or a NR system, and those skilled in the art may understand its meaning. The technical scheme described in the embodiment of the present disclosure may be applied to the 5G NR system and also to subsequent evolution systems of the 5G NR system.

Fig. 3 shows a flow chart of a method for stopping positioning a terminal according to an embodiment of the present disclosure. The method may be applied to a first network device. The method includes the following steps.

In step 302, in case that the first network device determines that the terminal stops sending an uplink positioning reference signal, notification information is sent to a second network device.

The notification information is used to enable the second network device to decide to stop positioning the terminal. Optionally, the uplink positioning reference signal of the terminal is configured by the first network device to the terminal. For example, in case that the terminal accesses a cell provided by the first network device, the first network device allocates a configuration of the uplink positioning reference signal to the terminal, thus configuring the uplink positioning reference signal for the terminal. The configuration of the uplink positioning reference signal includes time-frequency resources used by the terminal when sending the uplink positioning reference signal. Optionally, the uplink positioning reference signal is a SRS or a pos-SRS (i.e., a SRS for positioning).

Optionally, the notification information includes at least one of the following information:
information for indicating a positioning process of the terminal;
information for identifying an ongoing positioning measurement; and
information for indicating a stop of positioning.

The information for indicating the positioning process of the terminal refers to the information used to indicate the positioning process of the terminal based on the uplink positioning reference signal configured for the terminal, such as a new radio positioning protocol A process identifier (NRPPa Transaction ID). The information for identifying the ongoing positioning measurement refers to the information of the ongoing positioning measurement on the uplink positioning reference signal configured for the terminal, such as a location management function measurement identifier (LMF measurement ID). The information for indicating the stop of positioning refers to the information used to indicate to stop positioning the terminal configured with the above uplink positioning reference signal, such as a cause value or an indication. For example, the cause value is a SRS sending stop, and the indication is a SRS sending stop indication.

Optionally, the first network device determines whether the terminal stops sending the uplink positioning reference signal by at least one of the following ways.
(1) In case that the first network device determines that the terminal moves from a first cell to a second cell, the first network device determines that the terminal stops sending the uplink positioning reference signal.
   The first cell is a cell that allocates the configuration of the uplink positioning reference signal for the terminal, that is, the terminal receives the configuration of the uplink positioning reference signal sent by the first network device in the first cell. The first cell and the second cell are cells provided by the first network device. For example, the first network device is a base station, which may be called a last serving gNB. After being configured with the uplink positioning reference signal in the first cell, the terminal moves to another cell (the second cell) under the last serving gNB, and the terminal will send an RRC resume request or an RRC setup request to the last serving gNB, so that the last serving gNB may know that the terminal has moved from the first cell to the second cell and determine that the terminal stops sending the uplink positioning reference signal.
(2) In case that the first network device determines that the terminal moves from a first cell to a third cell, the first network device determines that the terminal stops sending the uplink positioning reference signal.
   The first cell is a cell that allocates the configuration of the uplink positioning reference signal for the terminal, the first cell is a cell provided by the first network device, and the third cell is a cell provided by a third network device. For example, the first network device is a base station, which may be called a last serving gNB, and the third network device is a base station, which may be called a new serving gNB. The first network device is different from the third network device. The terminal moves from the first cell under last serving gNB to the third cell under the new serving gNB, and initiates a RRC resume request or a RRC setup request to the new serving gNB. The new serving gNB will send a retrieve UE context request to the last serving gNB to obtain the context of the terminal. In this case, the last serving gNB may know that the terminal is no longer in the previous serving cell (the first cell), and thus determine that the terminal stops sending the uplink positioning reference signal.
(3) In case that the first network device determines that the uplink positioning reference signal sent by the terminal is not received within a preset duration, the first network device determines that the terminal stops sending the uplink positioning reference signal.

For example, the first network device is a base station, which may be called a last serving gNB. When the last serving gNB does not receive the uplink positioning reference signal sent by the terminal within the preset duration, the last serving gNB will determine that the terminal has stopped sending the uplink positioning reference signal. Optionally, the preset duration is pre-configured, or configured by other network devices to the first network device, or determined by the first network device, for example, according to the capability information of the terminal.

It should be noted that the ways in which the first network device determines that the terminal stops sending the uplink positioning reference signal only serve as examples, rather than limitations to the method according to the embodiment of the present disclosure. The first network device may also determine that the terminal stops sending the uplink positioning reference signal in other ways.

Optionally, the first network device adopts a central unit-distributed unit (CU-DU) separation architecture. In case that the DU of the first network device determines that the terminal stops sending the uplink positioning reference signal, the DU of the first network device will send the above notification information to the CU of the first network device, and then the CU of the first network device will send the notification information to the second network device. Optionally, the DU of the first network device may also determine that the terminal stops sending the uplink positioning reference signal in the above ways. For example, in case that the uplink positioning reference signal sent by the terminal is not received within the preset duration, it will be determined that the terminal stops sending the uplink positioning reference signal.

Optionally, the notification information sent by the DU of the first network device to the CU of the first network device is included in an F1 application protocol (F1AP) message of an F1 interface between the DU and the CU. For example, the notification information is included in at least one of a measurement failure indication message, a measurement abort notify message, a measurement update message, a positioning information update message, and a positioning abort notify message.

Optionally, the configuration of the uplink positioning reference signal of the terminal is configured by the first network device to the terminal. When the first network device determines that the terminal stops sending the uplink positioning reference signal, the first network device will also release the configuration of the uplink positioning reference signal. For example, the first network device releasing the configuration of the uplink positioning reference signal means that the first network device deletes the configuration of the uplink positioning reference signal locally, and in this case, the time-frequency resources corresponding to the configuration of the uplink positioning reference signal may be configured by the first network device for other terminals.

In case that the first network device adopts the above CU-DU separation architecture, the configuration of the uplink positioning reference signal of the terminal is configured by the DU of the first network device to the terminal. When the DU of the first network device determines that the terminal stops sending the uplink positioning reference signal, the DU of the first network device releases the configuration of the uplink positioning reference signal.

Optionally, the second network device is a LMF network element, or the second network device includes at least one second base station.

In the situation that the second network device is the LMF network element:
The first network device is a first base station and the second network device is the LMF network element. In this case, the notification information is included in the NRPPa message. Optionally, the NRPPa message includes at least one of:
a terminal associated new radio positioning protocol A (UE association NRPPa) message; and
a non-terminal associated new radio positioning protocol A (non-UE association NRPPa) message.

For example, the notification information is included in at least one of a measurement failure indication message, a measurement abort notify message, a measurement update message, a positioning information update message, and a positioning abort notify message.

In case that the first network device decides to release the configuration of the uplink positioning reference signal previously allocated to the terminal, the first network device will send the above notification information to the LMF network element. The notification information sent by the first network device to the LMF network element is used for the LMF network element to decide to send a measurement stop message to at least one second base station. The second base station is a base station participating in measuring the uplink positioning reference signal sent by the terminal, and the measurement stop message is used to instruct the second base station to stop measuring the uplink positioning reference signal. After receiving the measurement stop message, the second base station will decide to stop measuring the uplink positioning reference signal, thus terminating the measurement process. The second base station is the same as or different from the third base station.

In the situation that the second network device includes at least one second base station:
The first network device is a first base station, and the second network device includes the at least one second base station. The second base station is a base station participating in measuring the uplink positioning reference signal sent by the terminal. In this case, the notification information is included in an Xn application protocol (XnAP) message of an Xn interface between the base stations. After receiving the notification information, the second base station will decide to stop positioning the terminal according to the notification information, that is, stop measuring the uplink positioning reference signal of the terminal, thus terminating the measurement process.

In case that the first network device decides to release the configuration of the uplink positioning reference signal previously allocated to the terminal, the first network device will send the above notification information to the second base station. The second base station is the same as or different from the third base station.

Optionally, the first network device may also send monitoring information to the second network device. The monitoring information is information for monitoring a stop of measuring the uplink positioning reference signal of the terminal. The second network device may decide whether to stop positioning the terminal according to the monitoring information. Optionally, the second network device includes at least one of the LMF network element and the second base station.

Optionally, the monitoring information includes at least one of:
a TA timer;
a release timer; and
a measurement stop timer.

The above timers are timers generated according to the TA timer of the terminal, or the above timers may also be timers determined by the first network device according to actual situations. In case that the timer in the monitoring information times out, it may be regarded as that the terminal stops sending the uplink positioning reference signal. Optionally, the monitoring information also has information for indicating the release of the uplink positioning reference signal, or information for indicating the stop of positioning the terminal, or information for indicating the stop of measuring the uplink positioning reference signal. The node that receives the monitoring information may judge whether the positioning of the terminal or the measurement of the uplink positioning reference signal of the terminal may be stopped through the monitoring information.

Optionally, the first network device is the first base station and the second network device is the LMF network element. The monitoring information sent by the first base station to the LMF network element is included in a positioning information feedback message, and the positioning information feedback message is sent by the first base station in response to a positioning information request message sent by the LMF network element. For example, the positioning information feedback message specifies a positioning information response. The positioning information request message specifies a positioning information request.

Optionally, after receiving the monitoring information, the LMF network element will forward the monitoring information to at least one second base station, that is, the monitoring information will be forwarded by the LMF network element to at least one second base station. The second base station is a base station participating in measuring the uplink positioning reference signal sent by the terminal, and the monitoring information is used to enable the second base station to determine whether to stop measuring the uplink positioning reference signal of the terminal. Optionally, the monitoring information sent by the LMF network element to the second base station is included in a measurement request message. For example, the measurement request message refers to a measurement request. When the above monitoring information is included in the measurement request message, the second base station participating in positioning the terminal will consider the monitoring information, so as to decide whether to stop the measurement related to positioning the terminal.

It should be noted that "positioning" in the embodiment of the present disclosure refers to determining the location of the terminal according to the uplink positioning reference signal, and "measuring" refers to determining the location of the terminal by measuring the uplink positioning reference signal of the terminal. "Positioning" and "measuring" have the same meaning, and they are both used to explain the uplink positioning process of the terminal through the uplink positioning reference signal.

To sum up, in the method according to this embodiment, when the first network device determines that the terminal stops sending the uplink positioning reference signal, the first network device sends a message for notifying the stop of positioning to the second network device, so that other network devices participating in positioning the terminal may be timely notified to stop measuring the uplink positioning reference signal of the terminal, thus avoiding the waste of uplink resources caused by reserving corresponding uplink resources for measuring the uplink positioning reference signal by other network devices participating in positioning the terminal, and also avoiding the waste of processing resources and additional power consumption caused by unnecessary signal reception by the network devices participating in positioning the terminal.

Fig. 4 shows a flow chart of a method for stopping positioning a terminal according to an embodiment of the present disclosure. The method may be applied to a LMF network element. The method includes the following steps.

In step 402, notification information sent by a first network device is received.

The notification information is sent by the first network device in case that the first network device determines that the terminal stops sending the uplink positioning reference signal. The notification information is used to enable the second network device to decide to stop positioning the terminal. The notification information is used for the LMF network element to decide to send a measurement stop message to at least one second base station. Optionally, the uplink positioning reference signal of the terminal is configured by the first network device to the terminal. Optionally, the uplink positioning reference signal is a SRS or a pos-SRS (i.e., a SRS for positioning). Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the notification information sent by the first network device to the LMF network element is included in a NRPPa message. The NRPPa message includes at least one of:
a UE association NRPPa message; and
a non-UE association NRPPa message.

Optionally, the first network device adopts a CU-DU separation architecture. The LMF network element will receive the notification information sent by the CU of the first network device. The notification information is sent by the DU of the first network device to the CU of the first network device in case that the DU of the first network device determines that the terminal stops sending the uplink positioning reference signal.

Optionally, the notification information sent by the DU of the first network device to the CU of the first network device is included in an F1AP message of an F1 interface between the DU and the CU.

For example, the above notification information is included in at least one of a measurement failure indication message, a measurement abort notify message, a measurement update message, a positioning information update message, and a positioning abort notify message.

The first network device will also release the configuration of the uplink positioning reference signal in case that the first network device determines that the terminal stops sending the uplink positioning reference signal. In case that the first network device decides to release the configuration of the uplink positioning reference signal previously allocated to the terminal, the first network device will send the above notification information to the LMF network element. Optionally, the first network device is a first base station.

In step 404, it is decided to stop positioning the terminal according to the notification information.

After the LMF network element decides to stop positioning the terminal according to the notification information, the LMF network element will also send a measurement stop message to at least one second base station according to the notification information. Optionally, after receiving the notification information, the LMF network element may also forward the notification information to at least one second base station. The second base station is a base station participating in measuring the uplink positioning reference signal sent by the terminal, and the measurement stop message is used to instruct the second base station to stop measuring the uplink positioning reference signal. After receiving the measurement stop message, the second base station will decide to stop measuring the uplink positioning reference signal, thus terminating the measurement process.

Optionally, the LMF network element may also receive monitoring information sent by the first network device. The monitoring information is information used to monitor a stop of measuring the uplink positioning reference signal. Optionally, the monitoring information includes at least one of:
a TA timer;
a release timer; and
a measurement stop timer.

The above timers are timers generated according to the TA timer of the terminal, or the above timers may also be timers determined by the first network device according to actual situations. In case that the timer in the monitoring information times out, it may be regarded as that the terminal stops sending the uplink positioning reference signal. Optionally, the monitoring information also has information for indicating the release of the uplink positioning reference signal, or information for indicating the stop of positioning the terminal, or information for indicating the stop of measuring the uplink positioning reference signal. The node that receives the monitoring information may judge whether the positioning of the terminal or the measurement of the uplink positioning reference signal of the terminal may be stopped through the monitoring information.

Optionally, the monitoring information sent by the first network device to the LMF network element is included in a positioning information feedback message, and the positioning information feedback message is sent by the first network device in response to a positioning information request message sent by the LMF network element. For example, the positioning information feedback message refers to a positioning information response. The positioning information request message refers to a positioning information request.

After receiving the monitoring information, the LMF network element will send the monitoring information to at least one second base station. The second base station is a base station participating in measuring the uplink positioning reference signal sent by the terminal, and the monitoring information is used to enable the second base station to determine whether to stop measuring the uplink positioning reference signal.

Optionally, the monitoring information sent by the LMF network element to the second base station is included in a measurement request message. For example, the measurement request message refers to a measurement request. When the above monitoring information is included in the measurement request message, the second base station participating in positioning the terminal will consider the monitoring information, so as to decide whether to stop the measurement related to positioning the terminal.

To sum up, in the method according to this embodiment, when the first network device determines that the terminal stops sending the uplink positioning reference signal, the first network device sends a message for notifying the stop of positioning to the LMF network element, so that the LMF network element may timely notify other network devices participating in positioning the terminal to stop measuring the uplink positioning reference signal of the terminal, thus avoiding the waste of uplink resources caused by reserving corresponding uplink resources for measuring the uplink positioning reference signal by other network devices participating in positioning the terminal, and also avoiding the waste of processing resources and additional power consumption caused by unnecessary signal reception by the network devices participating in positioning the terminal.

Fig. 5 shows a flow chart of a method for stopping positioning a terminal according to an embodiment of the present disclosure. The method may be applied to a second base station. The method includes the following steps.

In step 502, a message for deciding to stop measuring an uplink positioning reference signal sent by a terminal is received.

Optionally, the message for deciding to stop measuring the uplink positioning reference signal sent by the terminal is a measurement stop message.

The second base station receives the measurement stop message sent by the LMF network element. The measurement stop message is used to instruct the second base station to stop measuring the uplink positioning reference signal sent by the terminal. The measurement stop message is sent to the second base station by the LMF network element according to a notification information sent by a first network device. The notification information is sent by the first network device in case that the first network device determines that the terminal stops sending the uplink positioning reference signal. The second base station is a base station participating in measuring the uplink positioning reference signal sent by the terminal.

After receiving the measurement stop message, the second base station will decide to stop measuring the uplink positioning reference signal, thus terminating the measurement process.

Optionally, a message for deciding to stop measuring the uplink positioning reference signal sent by the terminal is the notification information.

The second base station receives the notification information sent by the first network device, and decides to stop measuring the uplink positioning reference signal according to the notification information. The notification information is sent by the first network device in case that the first network device determines that the terminal stops sending the uplink positioning reference signal, and the second base station is a base station participating in measuring the uplink positioning reference signal sent by the terminal.

Optionally, the notification information sent by the first network device to the second base station is included in an XnAP message of an Xn interface between the base stations. For example, the notification information is included in at least one of a measurement failure indication message, a measurement abort notify message, a measurement update message, a positioning information update message, and a positioning abort notify message. After receiving the notification information, the second base station will decide to stop positioning the terminal according to the notification information, that is, stop measuring the uplink positioning reference signal of the terminal, thus terminating the measurement process.

Optionally, the uplink positioning reference signal is a SRS or a pos-SRS (i.e., a SRS for positioning). Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the second base station may also receive monitoring information sent by the LMF network element, and determine whether to stop measuring the uplink positioning reference signal of the terminal according to the monitoring information. The monitoring information is sent by the first network device to the LMF network element. Optionally, the monitoring information includes at least one of:
a TA timer;
a release timer; and
a measurement stop timer.

The above timers are timers generated according to the TA timer of the terminal, or the above timers may also be timers determined by the first network device according to actual situations. In case that the timer in the monitoring information times out, it may be regarded as that the terminal stops sending the uplink positioning reference signal. Optionally, the monitoring information also has information for indicating the release of the uplink positioning reference signal, or information for indicating the stop of positioning the terminal, or information for indicating the stop of measuring the uplink positioning reference signal. The node that receives the monitoring information may judge whether the positioning of the terminal or the measurement of the uplink positioning reference signal of the terminal may be stopped through the monitoring information.

Optionally, the monitoring information sent by the LMF network element to the second base station is included in a measurement request message. For example, the measurement request message refers to a measurement request. When the above monitoring information is included in the measurement request message, the second base station participating in positioning the terminal will consider the monitoring information, so as to decide whether to stop the measurement related to positioning the terminal.

To sum up, in the method according to this embodiment, the network device participating in positioning the terminal may stop measuring the uplink positioning reference signal of the terminal by receiving the message for deciding to stop measuring the uplink positioning reference signal sent by the terminal, thus avoiding the waste of uplink resources caused by reserving corresponding uplink resources for measuring the uplink positioning reference signal by the network devices participating in positioning the terminal, and also avoiding the waste of processing resources and additional power consumption caused by unnecessary signal reception by the network devices participating in positioning the terminal.

Fig. 6 shows a flow chart of a method for stopping positioning a terminal according to an embodiment of the present disclosure. The method may be applied to a first network device. The method includes the following steps.

In step 602, in case that the first network device determines that the terminal stops sending an uplink positioning reference signal, the first network device sends notification information to a LMF network element.

The notification information is used to enable the LMF network element to decide to stop positioning the terminal. Optionally, the uplink positioning reference signal of the terminal is configured by the first network device to the terminal. The configuration of the uplink positioning reference signal includes time-frequency resources used by the terminal when sending the uplink positioning reference signal. Optionally, the uplink positioning reference signal is a SRS or a pos-SRS (i.e., a SRS for positioning).

Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the first network device determines whether the terminal stops sending the uplink positioning reference signal in at least one of the following ways.
(1) In case that the first network device determines that the terminal moves from a first cell to a second cell, the first network device determines that the terminal stops sending the uplink positioning reference signal.
   The first cell is a cell that allocates the configuration of the uplink positioning reference signal for the terminal, that is, the terminal receives the configuration of the uplink positioning reference signal sent by the first network device in the first cell. The first cell and the second cell are cells provided by the first network device.
(2) In case that the first network device determines that the terminal moves from a first cell to a third cell, the first network device determines that the terminal stops sending the uplink positioning reference signal.
   The first cell is a cell that allocates the configuration of the uplink positioning reference signal for the terminal, the first cell is a cell provided by the first network device, and the third cell is a cell provided by a third network device.
(3) In case that the first network device determines that the uplink positioning reference signal sent by the terminal is not received within a preset duration, the first network device determines that the terminal stops sending the uplink positioning reference signal.

It should be noted that the ways in which the first network device determines that the terminal stops sending the uplink positioning reference signal only serve as examples, rather than limitations to the method according to the embodiment of the present disclosure. The first network device may also determine that the terminal stops sending the uplink positioning reference signal in other ways.

Optionally, the configuration of the uplink positioning reference signal of the terminal is configured by the first network device to the terminal. In case that the first network device determines that the terminal stops sending the uplink positioning reference signal, the first network device will also release the configuration of the uplink positioning reference signal.

Optionally, the notification information sent by the first network device to the LMF network element is included in a NRPPa message. Optionally, the NRPPa message includes at least one of:
a UE association NRPPa message; and
a non-UE association NRPPa message.

For example, the notification information is included in at least one of a measurement failure indication message, a measurement abort notify message, a measurement update message, a positioning information update message, and a positioning abort notify message.

In case that the first network device decides to release the configuration of the uplink positioning reference signal previously allocated to the terminal, the first network device will send the above notification information to the LMF network element. The notification information sent by the first network device to the LMF network element is used for the LMF network element to decide to send a measurement stop message to at least one second base station. The second base station is a base station participating in measuring the uplink positioning reference signal sent by the terminal, and the measurement stop message is used to instruct the second base station to stop measuring the uplink positioning reference signal. After receiving the measurement stop message, the second base station will decide to stop measuring the uplink positioning reference signal, thus terminating the measurement process.

To sum up, in the method according to this embodiment, when the first network device determines that the terminal stops sending the uplink positioning reference signal, the first network device sends a message for notifying the stop of positioning to the LMF network element, so that the LMF network element may timely notify other network devices participating in positioning the terminal to stop measuring the uplink positioning reference signal of the terminal, thus avoiding the waste of uplink resources caused by reserving corresponding uplink resources for measuring the uplink positioning reference signals by other network devices participating in positioning the terminal, and also avoiding the waste of processing resources and additional power consumption caused by unnecessary signal reception by the network devices participating in positioning the terminal.

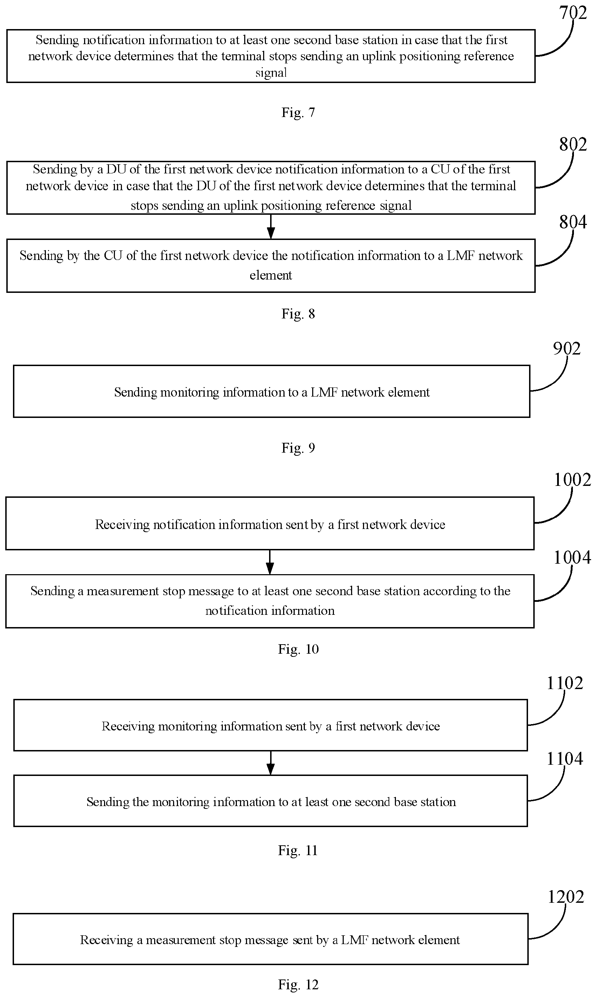

Fig. 7 shows a flow chart of a method for stopping positioning a terminal according to an embodiment of the present disclosure. The method may be applied to a first network device. The method includes the following steps.

In step 702, in case that the first network device determines that the terminal stops sending an uplink positioning reference signal, the first network device sends notification information to at least one second base station.

The notification information is used to enable the second base station to decide to stop positioning the terminal, and the second base station is a base station participating in measuring the uplink positioning reference signal sent by the terminal. Optionally, the uplink positioning reference signal of the terminal is configured by the first network device to the terminal. The configuration of the uplink positioning reference signal includes time-frequency resources used by the terminal when sending the uplink positioning reference signal. Optionally, the uplink positioning reference signal is a SRS or a pos-SRS (i.e., a SRS for positioning).

Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the first network device determines whether the terminal stops sending the uplink positioning reference signal in at least one of the following ways.
(1) In case that the first network device determines that the terminal moves from a first cell to a second cell, the first network device determines that the terminal stops sending the uplink positioning reference signal.
   The first cell is a cell that allocates the configuration of the uplink positioning reference signal for the terminal, that is, the terminal receives the configuration of the uplink positioning reference signal sent by the first network device in the first cell. The first cell and the second cell are cells provided by the first network device.
(2) In case that the first network device determines that the terminal moves from a first cell to a third cell, the first network device determines that the terminal stops sending the uplink positioning reference signal.
   The first cell is a cell that allocates the configuration of the uplink positioning reference signal for the terminal, the first cell is a cell provided by the first network device, and the third cell is a cell provided by a third network device.
(3) In case that the first network device determines that the uplink positioning reference signal sent by the terminal is not received within a preset duration, the first network device determines that the terminal stops sending the uplink positioning reference signal.

It should be noted that the ways in which the first network device determines that the terminal stops sending the uplink positioning reference signal only serve as examples, rather than limitations to the method according to the embodiment of the present disclosure. The first network device may also determine that the terminal stops sending the uplink positioning reference signal in other ways.

Optionally, the configuration of the uplink positioning reference signal of the terminal is configured by the first network device to the terminal. In case that the first network device determines that the terminal stops sending the uplink positioning reference signal, the first network device will also release the configuration of the uplink positioning reference signal.

Optionally, the notification information sent by the first network device to the second base station is included in an XnAP message of an Xn interface between the base stations. For example, the notification information is included in at least one of a measurement failure indication message, a measurement abort notify message, a measurement update message, a positioning information update message, and a positioning abort notify message. After receiving the notification information, the second base station will decide to stop positioning the terminal according to the notification information, that is, stop measuring the uplink positioning reference signal of the terminal, thus terminating the measurement process.

In case that the first network device decides to release the configuration of the uplink positioning reference signal previously allocated to the terminal, the first network device will send the above notification information to the second base station.

To sum up, in the method according to this embodiment, when the first network device determines that the terminal stops sending the uplink positioning reference signal, the first network device sends a message for notifying the stop of positioning to the network device participating in positioning the terminal, so that the network device participating in positioning the terminal may stop measuring the uplink positioning reference signal of the terminal, thus avoiding the waste of uplink resources caused by reserving corresponding uplink resources for measuring the uplink positioning reference signal by the network device participating in positioning the terminal, and also avoiding the waste of processing resources and additional power consumption caused by unnecessary signal reception by the network device participating in positioning the terminal.

Fig. 8 shows a flow chart of a method for stopping positioning a terminal according to an embodiment of the present disclosure. The method may be applied to a first network device, and the first network device adopts a CU-DU separation architecture. The method includes the following steps.

In step 802, in case that a DU of the first network device determines that the terminal stops sending an uplink positioning reference signal, the DU of the first network device sends notification information to a CU of the first network device.

The notification information is used to enable the LMF network element to decide to stop positioning the terminal. Optionally, the uplink positioning reference signal of the terminal is configured by the DU of the first network device to the terminal. The configuration of the uplink positioning reference signal includes time-frequency resources used by the terminal when sending the uplink positioning reference signal. Optionally, the uplink positioning reference signal is a SRS or a pos-SRS (i.e., a SRS for positioning).

Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the DU of the first network device determines whether the terminal stops sending the uplink positioning reference signal in at least one of the following ways.
(1) In case that the DU of the first network device determines that the terminal moves from a first cell to a second cell, the DU of the first network device determines that the terminal stops sending the uplink positioning reference signal.
   The first cell is a cell that allocates the configuration of the uplink positioning reference signal to the terminal, that is, the terminal receives the configuration of the uplink positioning reference signal sent by the DU of the first network device in the first cell. The first cell and the second cell are cells provided by the first network device.
(2) In case that the DU of the first network device determines that the terminal moves from a first cell to a third cell, the DU of the first network device determines that the terminal stops sending the uplink positioning reference signal.
   The first cell is a cell that allocates the configuration of the uplink positioning reference signal for the terminal, the first cell is a cell provided by the first network device, and the third cell is a cell provided by a third network device.
(3) In case that the DU of the first network device determines that the uplink positioning reference signal sent by the terminal is not received within a preset duration, the DU of the first network device determines that the terminal stops sending the uplink positioning reference signal.

It should be noted that the ways in which the DU of the first network device determines that the terminal stops sending the uplink positioning reference signal only serve as examples, rather than limitations to the method according to the embodiment of the present disclosure. The DU of the first network device may also determine that the terminal stops sending the uplink positioning reference signal in other ways.

Optionally, the configuration of the uplink positioning reference signal of the terminal is configured by the DU of the first network device to the terminal. In case that the DU of the first network device determines that the terminal stops sending the uplink positioning reference signal, the DU of the first network device releases the configuration of the uplink positioning reference signal.

Optionally, the notification information sent by the DU of the first network device to the CU of the first network device is included in an F1AP message of an F1 interface between the DU and the CU. For example, the notification information is included in at least one of a measurement failure indication message, a measurement abort notify message, a measurement update message, a positioning information update message, and a positioning abort notify message.

In step 804, the CU of the first network device sends the notification information to a LMF network element.

Optionally, the notification information sent by the CU of the first network device to the LMF network element is included in a NRPPa message. Optionally, the NRPPa message includes at least one of:
a UE association NRPPa message; and
a non-UE association NRPPa message.

In case that the DU of the first network device decides to release the configuration of the uplink positioning reference signal previously allocated to the terminal, the CU of the first network device will send the above notification information to the LMF network element. The notification information sent by the CU of the first network device to the LMF network element is used for the LMF network element to decide to send a measurement stop message to at least one second base station. The second base station is a base station participating in measuring the uplink positioning reference signal sent by the terminal, and the measurement stop message is used to instruct the second base station to stop measuring the uplink positioning reference signal. After receiving the measurement stop message, the second base station will decide to stop measuring the uplink positioning reference signal, thus terminating the measurement process.

To sum up, in the method according to this embodiment, when the DU of the first network device determines that the terminal stops sending the uplink positioning reference signal, the CU of the first network device sends a message for notifying the stop of positioning to the LMF network element, so that the LMF network element may timely notify other network devices participating in positioning the terminal to stop measuring the uplink positioning reference signal of the terminal, thus avoiding the waste of uplink resources caused by reserving corresponding uplink resources for measuring the uplink positioning reference signal by other network devices participating in positioning the terminal, and also avoiding the waste of processing resources and additional power consumption caused by unnecessary signal reception by the network devices participating in positioning the terminal.

Fig. 9 shows a flow chart of a method for stopping positioning a terminal according to an embodiment of the present disclosure. The method may be applied to a first network device. The method includes the following steps.

In step 902, monitoring information is sent to a LMF network element.

The monitoring information is information for monitoring a stop of measuring an uplink positioning reference signal of the terminal. Optionally, the uplink positioning reference signal of the terminal is configured by the first network device to the terminal. The node that receives the monitoring information may decide whether to stop positioning the terminal according to the monitoring information. Optionally, the monitoring information includes at least one of:
a TA timer;
a release timer; and
a measurement stop timer.

The above timers are timers generated according to the TA timer of the terminal, or the above timers may also be timers determined by the first network device according to actual situations. In case that the timer in the monitoring information times out, it may be regarded as that the terminal stops sending the uplink positioning reference signal. Optionally, the monitoring information also has information for indicating the release of the uplink positioning reference signal, or information for indicating the stop of positioning the terminal, or information for indicating the stop of measuring the uplink positioning reference signal. The node that receives the monitoring information may judge whether the positioning of the terminal or the measurement of the uplink positioning reference signal of the terminal may be stopped through the monitoring information.

Optionally, the first network device is a first base station. The monitoring information sent by the first base station to the LMF network element is included in a positioning information feedback message, and the positioning information feedback message is sent by the first base station in response to a positioning information request message sent by the LMF network element. For example, the positioning information feedback message refers to a positioning information response. The positioning information request message refers to a positioning information request.

Optionally, after receiving the monitoring information, the LMF network element will forward the monitoring information to at least one second base station, that is, the monitoring information will be forwarded by the LMF network element to at least one second base station. The second base station is a base station participating in measuring the uplink positioning reference signal sent by the terminal, and the monitoring information is used to enable the second base station to determine whether to stop measuring the uplink positioning reference signal of the terminal. Optionally, the monitoring information sent by the LMF network element to the second base station is included in a measurement request message. For example, the measurement request message refers to a measurement request. When the above monitoring information is included in the measurement request message, the second base station participating in positioning the terminal will consider the monitoring information, so as to decide whether to stop the measurement related to positioning the terminal.

To sum up, in the method according to this embodiment, the monitoring information is sent to the LMF network element, so that the network device participating in positioning the terminal may obtain the monitoring information, so as to decide whether to stop the measurement related to positioning the terminal according to the monitoring information, thus avoiding the waste of uplink resources caused by reserving corresponding uplink resources for measuring the uplink positioning reference signal by the network device participating in positioning the terminal, and also avoiding the waste of processing resources and additional power consumption caused by unnecessary signal reception by the network device participating in positioning the terminal.

Fig. 10 shows a flow chart of a method for stopping positioning a terminal according to an embodiment of the present disclosure. The method may be applied to a LMF network element. The method includes the following steps.

In step 1002, notification information sent by a first network device is received.

The notification information is sent by the first network device in case that the first network device determines that the terminal stops sending an uplink positioning reference signal. The notification information is used to enable a second network device to decide to stop positioning the terminal. Optionally, the uplink positioning reference signal of the terminal is configured by the first network device to the terminal. Optionally, the uplink positioning reference signal is a SRS or a pos-SRS (i.e., a SRS for positioning). Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the notification information sent by the first network device to the LMF network element is included in a NRPPa message. The NRPPa message includes at least one of:
a UE association NRPPa message; and
a non-UE association NRPPa message.

Optionally, the first network device adopts a CU-DU separation architecture. The LMF network element will receive the notification information sent by a CU of the first network device. The notification information is sent by a DU of the first network device to the CU of the first network device in case that the DU of the first network device determines that the terminal stops sending the uplink positioning reference signal.

Optionally, the notification information sent by the DU of the first network device to the CU of the first network device is included in an F1AP message of an F1 interface between the DU and the CU.

For example, the above notification information is included in at least one of a measurement failure indication message, a measurement abort notify message, a measurement update message, a positioning information update message, and a positioning abort notify message.

The first network device will also release the configuration of the uplink positioning reference signal in case that the first network device determines that the terminal stops sending the uplink positioning reference signal. In case that the first network device decides to release the configuration of the uplink positioning reference signal previously allocated to the terminal, the first network device will send the above notification information to the LMF network element. Optionally, the first network device is a first base station.

In step 1004, a measurement stop message is sent to at least one second base station according to the notification information.

The LMF network element may decide to stop positioning the terminal according to the notification information, and after deciding to stop positioning the terminal according to the notification information, the LMF network element will also send the measurement stop message to at least one second base station according to the notification information. The second base station is a base station participating in measuring the uplink positioning reference signal sent by the terminal, and the measurement stop message is used to instruct the second base station to stop measuring the uplink positioning reference signal. After receiving the measurement stop message, the second base station will decide to stop measuring the uplink positioning reference signal, thus terminating the measurement process.

To sum up, in the method according to this embodiment, when the first network device determines that the terminal stops sending the uplink positioning reference signal, the first network device sends a message for notifying the stop of positioning to the LMF network element, so that the LMF network element may timely notify other network devices participating in positioning the terminal to stop measuring the uplink positioning reference signal of the terminal, thus avoiding the waste of uplink resources caused by reserving corresponding uplink resources for measuring the uplink positioning reference signal by other network devices participating in positioning the terminal, and also avoiding the waste of processing resources and additional power consumption caused by unnecessary signal reception by the network devices participating in positioning the terminal.

Fig. 11 shows a flow chart of a method for stopping positioning a terminal according to an embodiment of the present disclosure. The method may be applied to a LMF network element. The method includes the following steps.

In step 1102, monitoring information sent by a first network device is received.

The monitoring information is information for monitoring a stop of measuring an uplink positioning reference signal of the terminal. Optionally, the monitoring information includes at least one of:
a TA timer;
a release timer; and
a measurement stop timer.

The above timers are timers generated according to the TA timer of the terminal, or the above timers may also be timers determined by the first network device according to actual situations. In case that the timer in the monitoring information times out, it may be regarded as that the terminal stops sending the uplink positioning reference signal. Optionally, the monitoring information also has information for indicating the release of the uplink positioning reference signal, or information for indicating the stop of positioning the terminal, or information for indicating the stop of measuring the uplink positioning reference signal. The node that receives the monitoring information may judge whether the positioning of the terminal or the measurement of the uplink positioning reference signal of the terminal may be stopped through the monitoring information.

Optionally, the monitoring information sent by the first network device to the LMF network element is included in a positioning information feedback message, and the positioning information feedback message is sent by the first network device in response to a positioning information request message sent by the LMF network element. For example, the positioning information feedback message refers to a positioning information response. The positioning information request message refers to a positioning information request.

In step 1104, the monitoring information is sent to at least one second base station.

After receiving the monitoring information, the LMF network element will send the monitoring information to at least one second base station. The second base station is a base station participating in measuring the uplink positioning reference signal sent by the terminal, and the monitoring information is used to enable the second base station to determine whether to stop measuring the uplink positioning reference signal.

Optionally, the monitoring information sent by the LMF network element to the second base station is included in a measurement request message. For example, the measurement request message refers to a measurement request. When the above monitoring information is included in the measurement request message, the second base station participating in positioning the terminal will consider the monitoring information, so as to decide whether to stop the measurement related to positioning the terminal.

To sum up, in the method according to this embodiment, the first network device sends the monitoring information to the LMF network element, and the LMF network element sends the monitoring information to the second base station, so that the network devices participating in positioning the terminal may obtain the monitoring information, so as to decide whether to stop the measurement related to positioning the terminal according to the monitoring information, thus avoiding the waste of uplink resources caused by reserving corresponding uplink resources for measuring the uplink positioning reference signal by the network devices participating in positioning the terminal, and also avoiding the waste of processing resources and additional power consumption caused by unnecessary signal reception by the network devices participating in positioning the terminal.

Fig. 12 shows a flow chart of a method for stopping positioning a terminal according to an embodiment of the present disclosure. The method may be applied to a second base station. The method includes the following steps.

In step 1202, a measurement stop message sent by a LMF network element is received.

The measurement stop message is used to instruct the second base station to stop measuring an uplink positioning reference signal sent by the terminal. The measurement stop message is sent to the second base station by the LMF network element according to notification information sent by a first network device. The notification information is sent by the first network device in case that the first network device determines that the terminal stops sending the uplink positioning reference signal. The second base station is a base station participating in measuring the uplink positioning reference signal sent by the terminal.

After receiving the measurement stop message, the second base station will decide to stop measuring the uplink positioning reference signal, thus terminating the measurement process.

Optionally, the uplink positioning reference signal is a SRS or a pos-SRS (i.e., a SRS for positioning). Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

To sum up, in the method according to this embodiment, by receiving the measurement stop message, the network device participating in positioning the terminal may stop measuring the uplink positioning reference signal of the terminal, thus avoiding the waste of uplink resources caused by reserving corresponding uplink resources for measuring the uplink positioning reference signal by the network device participating in positioning the terminal, and also avoiding the waste of processing resources and additional power consumption caused by unnecessary signal reception by the network device participating in positioning the terminal.

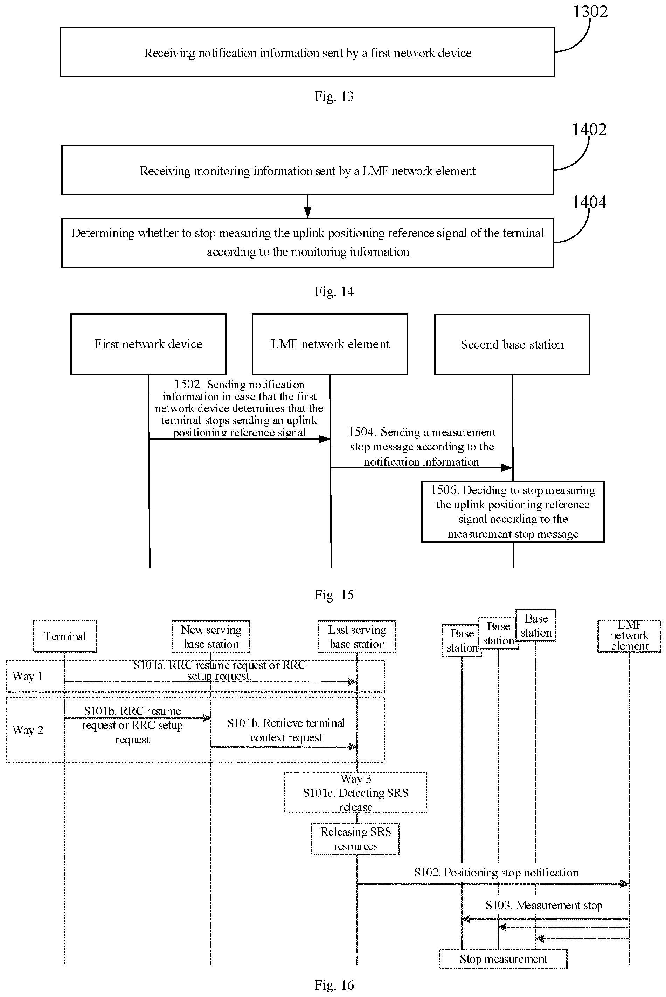

Fig. 13 shows a flow chart of a method for stopping positioning a terminal according to an embodiment of the present disclosure. The method may be applied to a second base station. The method includes the following steps.

In step 1302, notification information sent by a first network device is received.

The second base station receives the notification information sent by the first network device, and decides to stop measuring an uplink positioning reference signal according to the notification information. The notification information is sent by the first network device in case that the first network device determines that the terminal stops sending the uplink positioning reference signal, and the second base station is a base station participating in measuring the uplink positioning reference signal sent by the terminal.

Optionally, the notification information sent by the first network device to the second base station is included in an XnAP message of an Xn interface between the base stations. For example, the notification information is included in at least one of a measurement failure indication message, a measurement abort notify message, a measurement update message, a positioning information update message, and a positioning abort notify message. After receiving the notification information, the second base station will decide to stop positioning the terminal according to the notification information, that is, stop measuring the uplink positioning reference signal of the terminal, thus terminating the measurement process.

Optionally, the uplink positioning reference signal is a SRS or a pos-SRS (i.e., a SRS for positioning). Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

To sum up, in the method according to this embodiment, the first network device sends a message for notifying the stop of positioning to the network device participating in positioning the terminal, so that the network device participating in positioning the terminal may stop measuring the uplink positioning reference signal of the terminal, thus avoiding the waste of uplink resources caused by reserving corresponding uplink resources for measuring the uplink positioning reference signal by the network device participating in positioning the terminal, and also avoiding the waste of processing resources and additional power consumption caused by unnecessary signal reception by the network device participating in positioning the terminal.

Fig. 14 shows a flow chart of a method for stopping positioning a terminal according to an embodiment of the present disclosure. The method may be applied to a second base station. The method includes the following steps.

In step 1402, monitoring information sent by a LMF network element is received.

The monitoring information is sent by a first network device to the LMF network element. Optionally, the monitoring information includes at least one of:
a TA timer;
a release timer; and
a measurement stop timer.

The above timers are timers generated according to the TA timer of the terminal, or the above timer may also be timers determined by the first network device according to actual situations. In case that the timer in the monitoring information times out, it may be regarded as that the terminal stops sending an uplink positioning reference signal. Optionally, the monitoring information also has information for indicating the release of the uplink positioning reference signal, or information for indicating the stop of positioning the terminal, or information for indicating the stop of measuring the uplink positioning reference signal. The node that receives the monitoring information may judge whether the positioning of the terminal or the measurement of the uplink positioning reference signal of the terminal may be stopped through the monitoring information.

Optionally, the monitoring information sent by the LMF network element to the second base station is included in a measurement request message. For example, the measurement request message refers to a measurement request. When the above monitoring information is included in the measurement request message, the second base station participating in positioning the terminal will consider the monitoring information, so as to decide whether to stop the measurement related to positioning the terminal.

In step 1404, it is determined whether to stop measuring the uplink positioning reference signal of the terminal according to the monitoring information.

In case that the second base station receives the monitoring information, the second base station will decide whether to stop measuring the uplink positioning reference signal of the terminal according to the monitoring information. For example, when the measurement request message sent by the LMF network element to the second base station includes the above monitoring information, the second base station participating in positioning the terminal will consider the monitoring information, so as to decide whether to stop the measurement related to positioning the terminal.

To sum up, in the method according to this embodiment, by receiving the monitoring information sent by the LMF network element, the network device participating in positioning the terminal may decide whether to stop the measurement related to positioning the terminal according to the monitoring information, thus avoiding the waste of uplink resources caused by reserving corresponding uplink resources for measuring the uplink positioning reference signal by the network device participating in positioning the terminal, and also avoiding the waste of processing resources and additional power consumption caused by unnecessary signal reception by the network device participating in positioning the terminal.

In the methods according to the embodiments of the present disclosure, in case that the first network device, which configures the uplink positioning reference signal for the terminal, determines that the terminal stops sending the uplink positioning reference signal, the notification information is sent to the network devices participating in positioning the terminal, so that other network devices participating in positioning the terminal may decide to stop positioning the terminal according to the notification information. This may include the following three situations:
(1) the first network device sending the notification information to the LMF network element;
(2) the first network device sending the notification information to the second base station; and
(3) the first network device sending the notification information to the LMF network element in case that the first network device adopts the CU-DU separation architecture.

In addition, in the methods according to the embodiments of the present disclosure, the monitoring information is also sent to the LMF network element through the first network device, and the LMF network element forwards the monitoring information to the second base station, so that the second base station may determine whether to stop measuring the uplink positioning reference signal of the terminal according to the monitoring information. The above scheme is explained through four embodiments in the following.
1. In the situation that the first network device sends the notification information to the LMF network element:
   Fig. 15 shows a flow chart of a method for stopping positioning a terminal according to an embodiment of the present disclosure. The method may be applied to the communication system shown in Fig. 2. The method includes the following steps.

In step 1502, in case that a first network device determines that the terminal stops sending an uplink positioning reference signal, the first network device sends notification information to a LMF network element.

The notification information is used to enable the LMF network element to decide to stop positioning the terminal. Optionally, the uplink positioning reference signal of the terminal is configured by the first network device to the terminal. The configuration of the uplink positioning reference signal includes time-frequency resources used by the terminal when sending the uplink positioning reference signal. Optionally, the uplink positioning reference signal is a SRS or a pos-SRS (i.e., a SRS for positioning).

Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the first network device determines whether the terminal stops sending the uplink positioning reference signal in at least one of the following ways.
(1) In case that the first network device determines that the terminal moves from a first cell to a second cell, the first network device determines that the terminal stops sending the uplink positioning reference signal.
   The first cell is a cell that allocates the configuration of the uplink positioning reference signal for the terminal, that is, the terminal receives the configuration of the uplink positioning reference signal sent by the first network device in the first cell. The first cell and the second cell are cells provided by the first network device.
(2) In case that the first network device determines that the terminal moves from a first cell to a third cell, the first network device determines that the terminal stops sending the uplink positioning reference signal.
   The first cell is a cell that allocates the configuration of the uplink positioning reference signal for the terminal, the first cell is a cell provided by the first network device, and the third cell is a cell provided by a third network device.
(3) In case that the first network device determines that the uplink positioning reference signal sent by the terminal is not received within a preset duration, the first network device determines that the terminal stops sending the uplink positioning reference signal.

It should be noted that the ways in which the first network device determines that the terminal stops sending the uplink positioning reference signal only serve as examples, rather than limitations to the method according to the embodiment of the present disclosure. The first network device may also determine that the terminal stops sending the uplink positioning reference signal in other ways.

Optionally, the configuration of the uplink positioning reference signal of the terminal is configured by the first network device to the terminal. In case that the first network device determines that the terminal stops sending the uplink positioning reference signal, the first network device will also release the configuration of the uplink positioning reference signal. In case that the first network device decides to release the configuration of the uplink positioning reference signal previously allocated to the terminal, the first network device will send the above notification information to the LMF network element. Optionally, the first network device is a first base station.

Optionally, the notification information sent by the first network device to the LMF network element is included in a NRPPa message. The NRPPa message includes at least one of:
a UE association NRPPa message; and
a non-UE association NRPPa message.

For example, the notification information is included in at least one of a measurement failure indication message, a measurement abort notify message, a measurement update message, a positioning information update message, and a positioning abort notify message.

In step 1504, the LMF network element sends a measurement stop message to at least one second base station according to the notification information.

The LMF network element may decide to stop positioning the terminal according to the notification information, and after deciding to stop positioning the terminal according to the notification information, the LMF network element will also send the measurement stop message to at least one second base station according to the notification information. The second base station is a base station participating in measuring the uplink positioning reference signal sent by the terminal, and the measurement stop message is used to instruct the second base station to stop measuring the uplink positioning reference signal.

In step 1506, the second base station decides to stop measuring the uplink positioning reference signal according to the measurement stop message.

After receiving the measurement stop message, the second base station will decide to stop measuring the uplink positioning reference signal of the terminal, thus terminating the measurement process.

As a specific example, Fig. 16 is a schematic diagram of a process of sending notification information according to an illustrative embodiment of the present disclosure. As shown in Fig. 16, in step S101, a last serving gNB finds that a terminal UE stops sending a SRS, and the last serving gNB decides to release SRS resources allocated to the UE. In way 1, the UE moves to another cell under the last serving gNB, and initiates a RRC resume request or a RRC setup request to the last serving gNB. The last serving gNB finds that the UE is no longer in the previous serving cell, that is, thinks that the UE has stopped sending the SRS, and decides to release the SRS resources previously allocated to the UE. In way 2, the UE moves to a cell under a new serving gNB and initiates a RRC resume request or a RRC setup request to the new serving gNB. The new serving gNB sends a retrieve UE context request to the last serving gNB to obtain the context of the UE. The last serving gNB finds that the serving UE is no longer in the previous service cell, that is, thinks that the UE has stopped sending the SRS, and decides to release the SRS resources previously allocated to the UE. In way 3, the last serving gNB monitors that the UE stops sending the SRS, for example, in case that any SRS sent by the UE has not been received within a certain period of time, it may be considered that the UE has stopped sending the SRS, and the last serving gNB decides to release the SRS resources previously allocated to the UE. In step S102, in case that the last serving gNB decides to release the SRS resources previously allocated to the UE, the last serving gNB sends information (notification information) for notifying the termination of positioning to the LMF network element. In step S103, in case that the LMF network element receives the information for notifying the termination of positioning sent from the last serving gNB, the LMF network element will send a measurement termination message (measurement stop message) to other base stations (gNBs or transmission and reception points (TRP)) participating in positioning, so as to terminate the measurement process.

To sum up, in the method according to this embodiment, when the first network device determines that the terminal stops sending the uplink positioning reference signal, the first network device sends a message for notifying the stop of positioning to the LMF network element, so that the LMF network element may timely notify other network devices participating in positioning the terminal to stop measuring the uplink positioning reference signal of the terminal, thus avoiding the waste of uplink resources caused by reserving corresponding uplink resources for measuring the uplink positioning reference signal by other network devices participating in positioning the terminal, and also avoiding the waste of processing resources and additional power consumption caused by unnecessary signal reception by the network devices participating in positioning the terminal.

2. In the situation that the first network device sends the notification information to the second base station:

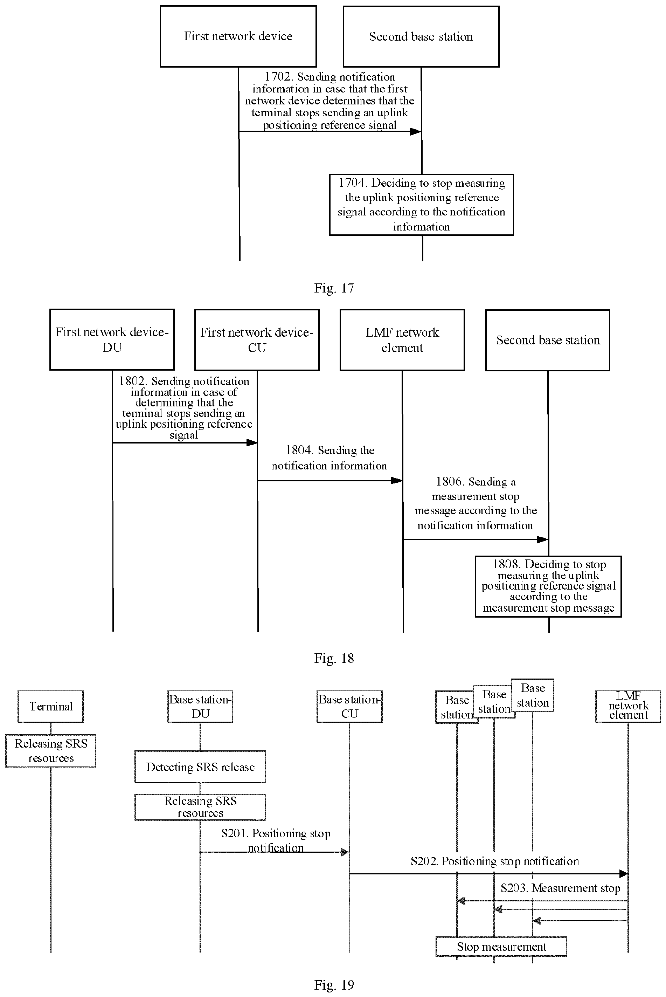

Fig. 17 shows a flow chart of a method for stopping positioning a terminal according to an embodiment of the present disclosure. The method may be applied to the communication system shown in Fig. 2. The method includes the following steps.

In step 1702, in case that the first network device determines that the terminal stops sending an uplink positioning reference signal, the first network device sends notification information to at least one second base station.

The notification information is used to enable the second base station to decide to stop positioning the terminal, and the second base station is a base station participating in measuring the uplink positioning reference signal sent by the terminal. Optionally, the uplink positioning reference signal of the terminal is configured by the first network device to the terminal. The configuration of the uplink positioning reference signal includes time-frequency resources used by the terminal when sending the uplink positioning reference signal. Optionally, the uplink positioning reference signal is a SRS or a pos-SRS (i.e., a SRS for positioning).

Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the first network device determines whether the terminal stops sending the uplink positioning reference signal in at least one of the following ways.
(1) In case that the first network device determines that the terminal moves from a first cell to a second cell, the first network device determines that the terminal stops sending the uplink positioning reference signal.
   The first cell is a cell that allocates the configuration of the uplink positioning reference signal for the terminal, that is, the terminal receives the configuration of the uplink positioning reference signal sent by the first network device in the first cell. The first cell and the second cell are cells provided by the first network device.
(2) In case that the first network device determines that the terminal moves from a first cell to a third cell, the first network device determines that the terminal stops sending the uplink positioning reference signal.
   The first cell is a cell that allocates the configuration of the uplink positioning reference signal for the terminal, the first cell is a cell provided by the first network device, and the third cell is a cell provided by a third network device.
(3) In case that the first network device determines that the uplink positioning reference signal sent by the terminal is not received within a preset duration, the first network device determines that the terminal stops sending the uplink positioning reference signal.

It should be noted that the above ways in which the first network device determines that the terminal stops sending the uplink positioning reference signal only serve as examples, rather than limitations to the method according to the embodiment of the present disclosure. The first network device may also determine that the terminal stops sending the uplink positioning reference signal in other ways.

Optionally, the configuration of the uplink positioning reference signal of the terminal is configured by the first network device to the terminal. In case that the first network device determines that the terminal stops sending the uplink positioning reference signal, the first network device will also release the configuration of the uplink positioning reference signal.

Optionally, the first network device is a first base station. The notification information sent by the first network device to the second base station is included in an XnAP message of an Xn interface between the base stations. For example, the notification information is included in at least one of a measurement failure indication message, a measurement abort notify message, a measurement update message, a positioning information update message, and a positioning abort notify message. In case that the first network device decides to release the configuration of the uplink positioning reference signal previously allocated to the terminal, the first network device will send the above notification information to the second base station.

In step 1704, the second base station decides to stop measuring the uplink positioning reference signal according to the notification information.

After receiving the notification information, the second base station will decide to stop positioning the terminal according to the notification information, that is, stop measuring the uplink positioning reference signal of the terminal, thus terminating the measurement process.

To sum up, in the method according to this embodiment, the first network device sends a message for notifying the stop of positioning to the network device participating in positioning the terminal, so that the network device participating in positioning the terminal may stop measuring the uplink positioning reference signal of the terminal, thus avoiding the waste of uplink resources caused by reserving corresponding uplink resources for measuring the uplink positioning reference signal by the network device participating in positioning the terminal, and also avoiding the waste of processing resources and additional power consumption caused by unnecessary signal reception by the network device participating in positioning the terminal.

3. In the situation that the first network device adopts the CU-DU separation architecture and sends the notification information to the LMF network element:
Fig. 18 shows a flow chart of a method for stopping positioning a terminal according to an embodiment of the present disclosure. The method may be applied to the communication system shown in Fig. 2. The method includes the following steps.

In step 1802, in case that a DU of a first network device determines that the terminal stops sending an uplink positioning reference signal, the DU of the first network device sends notification information to a CU of the first network device

The notification information is used to enable a LMF network element to decide to stop positioning the terminal. The first network device adopts the CU-DU separation architecture. Optionally, the uplink positioning reference signal of the terminal is configured by the DU of the first network device to the terminal. The configuration of the uplink positioning reference signal includes time-frequency resources used by the terminal when sending the uplink positioning reference signal. Optionally, the uplink positioning reference signal is a SRS or a pos-SRS (i.e., a SRS for positioning).

Optionally, the notification information includes at least one of the following information:
information for indicating a positioning process of the terminal;
information for identifying an ongoing positioning measurement; and
information for indicating a stop of positioning.

For example, the information for indicating the positioning process of the terminal is a NRPPa transaction ID. The information for identifying the ongoing positioning measurement is a LMF measurement ID. The information for indicating the stop of positioning is a cause value or an indication. For example, the cause value is a SRS sending stop, and the indication is a SRS sending stop instruction.

Optionally, the DU of the first network device determines whether the terminal stops sending the uplink positioning reference signal in at least one of the following ways.
(1) In case that the DU of the first network device determines that the terminal moves from the a cell to a second cell, the DU of the first network device determines that the terminal stops sending the uplink positioning reference signal.
   The first cell is a cell that allocates the configuration of the uplink positioning reference signal to the terminal, that is, the terminal receives the configuration of the uplink positioning reference signal sent by the DU of the first network device in the first cell. The first cell and the second cell are cells provided by the first network device.
(2) In case that the DU of the first network device determines that the terminal moves from a first cell to a third cell, the DU of the first network device determines that the terminal stops sending the uplink positioning reference signal.
   The first cell is a cell that allocates the configuration of the uplink positioning reference signal for the terminal, the first cell is a cell provided by the first network device, and the third cell is a cell provided by a third network device.
(3) In case that the DU of the first network device determines that the uplink positioning reference signal sent by the terminal is not received within a preset duration, the DU of the first network device determines that the terminal stops sending the uplink positioning reference signal.

It should be noted that the above ways in which the DU of the first network device determines that the terminal stops sending the uplink positioning reference signal only serve as examples, rather than limitations to the method according to the embodiment of the present disclosure. The DU of the first network device may also determine that the terminal stops sending the uplink positioning reference signal in other ways.

Optionally, the configuration of the uplink positioning reference signal of the terminal is configured by the DU of the first network device to the terminal. In case that the DU of the first network device determines that the terminal stops sending the uplink positioning reference signal, the DU of the first network device releases the configuration of the uplink positioning reference signal.

Optionally, the notification information sent by the DU of the first network device to the CU of the first network device is included in an F1AP message of an F1 interface between the DU and the CU. For example, the notification information is included in at least one of a measurement failure indication message, a measurement abort notify message, a measurement update message, a positioning information update message, and a positioning abort notify message.

In step 1804, the CU of the first network device sends the notification information to a LMF network element.

Optionally, the notification information sent by the CU of the first network device to the LMF network element is included in a NRPPa message. Optionally, the NRPPa message includes at least one of:
a UE association NRPPa message; and
a non-UE association NRPPa message.

In case that the DU of the first network device decides to release the configuration of the uplink positioning reference signal previously allocated to the terminal, the CU of the first network device will send the above notification information to the LMF network element.

In step 1806, the LMF network element sends a measurement stop message to at least one second base station according to the notification information.

The LMF network element may decide to stop positioning the terminal according to the notification information, and after deciding to stop positioning the terminal according to the notification information, the LMF network element will also send the measurement stop message to at least one second base station according to the notification information. The second base station is a base station participating in measuring the uplink positioning reference signal sent by the terminal, and the measurement stop message is used to instruct the second base station to stop measuring the uplink positioning reference signal.

In step 1808, the second base station decides to stop measuring the uplink positioning reference signal according to the measurement stop message.

After receiving the measurement stop message, the second base station will decide to stop measuring the uplink positioning reference signal of the terminal, thus terminating the measurement process.

As a specific example, Fig. 19 is a schematic diagram of a process of sending notification information according to an illustrative embodiment of the present disclosure. As shown in Fig. 19, under the CU-DU separation architecture, SRS resources are allocated by the gNB-DU, but when the UE stops sending the SRS due to cell reselection or timer timeout, the gNB-DU monitors that the UE stops sending the SRS, for example, in case that the SRS signal is not received within a certain period of time, the gNB-DU may release the SRS resources previously allocated to the UE. In step S201, in case that the gNB-DU releases the SRS resources, the gNB-DU sends information (notification information) for notifying the termination of positioning to the gNB-CU, and the gNB-CU receives the above message and information. In step S202, the gNB-CU sends the information for notifying the termination of positioning to the LMF network element. In step S203, in case that the LMF network element receives the information for notifying the termination of positioning sent from the gNB-CU, the LMF network element will send a measurement termination message (measurement stop message) to other base stations (gNBs or TRPs) participating in positioning, so as to terminate the measurement process.

To sum up, in the method according to this embodiment, when the DU of the first network device determines that the terminal stops sending the uplink positioning reference signal, the CU of the first network device sends a message for notifying the stop of positioning to the LMF network element, so that the LMF network element may timely notify other network devices participating in positioning the terminal to stop measuring the uplink positioning reference signal of the terminal, thus avoiding the waste of uplink resources caused by reserving corresponding uplink resources for measuring the uplink positioning reference signal by other network devices participating in positioning the terminal, and also avoiding the waste of processing resources and additional power consumption caused by unnecessary signal reception by the network devices participating in positioning the terminal.

4. In the situation that the first network device sends the monitoring information to the LMF network element:

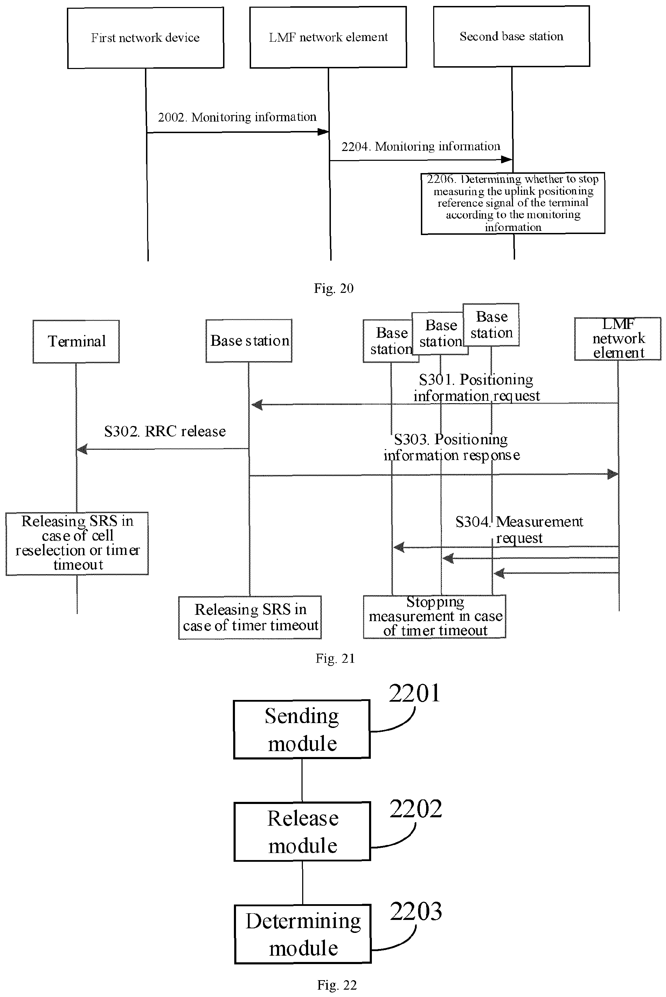

Fig. 20 shows a flow chart of a method for stopping positioning a terminal according to an embodiment of the present disclosure. The method may be applied to the communication system shown in Fig. 2. The method includes the following steps.

In step 2002, a first network device sends monitoring information to a LMF network element.

The monitoring information is information for monitoring a stop of measuring an uplink positioning reference signal of the terminal. Optionally, the uplink positioning reference signal of the terminal is configured by the first network device to the terminal. The node that receives the monitoring information may decide whether to stop positioning the terminal according to the monitoring information. Optionally, the monitoring information includes at least one of:
a TA timer;
a release timer; and
a measurement stop timer.

The above timers are timers generated according to the TA timer of the terminal, or the above timers may also be timers determined by the first network device according to actual situations. In case that the timer in the monitoring information times out, it may be regarded as that the terminal stops sending the uplink positioning reference signal. Optionally, the monitoring information also has information for indicating the release of the uplink positioning reference signal, or information for indicating the stop of positioning the terminal, or information for indicating the stop of measuring the uplink positioning reference signal. The node that receives the monitoring information may judge whether the positioning of the terminal or the measurement of the uplink positioning reference signal of the terminal may be stopped through the monitoring information.

Optionally, the first network device is a first base station. The monitoring information sent by the first base station to the LMF network element is included in a positioning information feedback message, and the positioning information feedback message is sent by the first base station in response to a positioning information request message sent by the LMF network element. For example, the positioning information feedback message refers to a positioning information response. The positioning information request message refers to a positioning information request.

In step 2004, the LMF network element sends the monitoring information to at least one second base station.

After receiving the monitoring information, the LMF network element will send the monitoring information to at least one second base station. The second base station is a base station participating in measuring the uplink positioning reference signal sent by the terminal, and the monitoring information is used to enable the second base station to determine whether to stop measuring the uplink positioning reference signal.

Optionally, the monitoring information sent by the LMF network element to the second base station is included in a measurement request message. For example, the measurement request message refers to a measurement request.

In step 2006, the second base station determines whether to stop measuring the uplink positioning reference signal of the terminal according to the monitoring information.

In case that the second base station receives the monitoring information, the second base station will decide whether to stop measuring the uplink positioning reference signal of the terminal according to the monitoring information. For example, when the measurement request message sent by the LMF network element to the second base station includes the above monitoring information, the second base station participating in positioning the terminal will consider the monitoring information, so as to decide whether to stop the measurement related to positioning the terminal.

As a specific example, Fig. 21 is a schematic diagram of a process of sending monitoring information according to an illustrative embodiment of the present disclosure. As shown in Fig. 21, in step S301, the LMF network element sends a positioning information request message to the gNB. In step S302, the gNB allocates uplink positioning resources, namely SRS resources, to the UE according to the positioning information request message, and the gNB sends a SRS configuration to the UE through a RRC release message. In step S303, the gNB sends a positioning information feedback message to the LMF network element, and this message may include information for monitoring the stop of measurement, such as a TA timer, a release timer, or a measurement stop timer. The above timers may be timers generated according to the TA timer of the terminal or timers determined by the gNB through implementation. Optionally, the information for monitoring the stop of measurement also has information for indicating the release of the SRS signal, or information for indicating the stop of positioning, or information for indicating the stop of measurement, etc. The receiving node may judge whether positioning or measurement may be stopped through this information. The LMF network element may receive the above message and information. In step S304, the LMF network element sends a measurement request message to other base stations (gNBs or TRPs) participating in positioning, and this message may include the information for monitoring the stop of measurement received in step S303. Other base stations participating in positioning may receive the above message and information. In case that the measurement request message includes the information for monitoring the stop of measurement, other base stations participating in positioning will consider the above information, and decide whether to stop the measurement related to positioning.

To sum up, in the method according to this embodiment, by sending the monitoring information to the LMF network element, the network device participating in positioning the terminal may obtain the monitoring information, so as to decide whether to stop the measurement related to positioning the terminal according to the monitoring information, thus avoiding the waste of uplink resources caused by reserving corresponding uplink resources for measuring the uplink positioning reference signal by the network device participating in positioning the terminal, and also avoiding the waste of processing resources and additional power consumption caused by unnecessary signal reception by the network device participating in positioning the terminal.

It should be noted that the sequence of the steps of the methods according to the embodiments of the present disclosure may be adjusted appropriately, and the steps may be increased or decreased correspondingly according to situations. Any skilled person familiar with the technical field may easily think of varied methods within the technical scope disclosed in the present disclosure, which should be covered by the protection scope of the present disclosure, and thus are not repeated here.

Fig. 22 shows a block diagram of an apparatus for stopping positioning a terminal according to an illustrative embodiment of the present disclosure. As shown in Fig. 22, the apparatus includes: a sending module 2201 configured to send notification information to a second network device in case that the apparatus determines that the terminal stops sending an uplink positioning reference signal. The notification information is used to enable the second network device to decide to stop positioning the terminal.

In an optional design, the apparatus is a first base station and the second network device is a LMF network element.

In an optional design, the notification information is included in a NRPPa message.

In an optional design, the notification information is used for the LMF network element to decide to send a measurement stop message to at least one second base station. The second base station is a base station participating in measuring the uplink positioning reference signal sent by the terminal, and the measurement stop message is used to instruct the second base station to stop measuring the uplink positioning reference signal.

In an optional design, the apparatus is a first base station, and the second network device includes at least one second base station. The second base station is a base station participating in measuring the uplink positioning reference signal sent by the terminal.

In an optional design, the notification information is included in an XnAP message.

In an optional design, the configuration of the uplink positioning reference signal is configured by the apparatus to the terminal, and the apparatus further includes: a release module 2202 configured to release the configuration of the uplink positioning reference signal in case that the apparatus determines that the terminal stops sending the uplink positioning reference signal.

In an optional design, the apparatus further includes: a determining module 2203 configured to determine that the terminal stops sending the uplink positioning reference signal in case that the apparatus determines that the terminal moves from a first cell to a second cell. The first cell is a cell that allocates the configuration of the uplink positioning reference signal to the terminal, and the first cell and the second cell are cells provided by the apparatus.

In an optional design, the apparatus further includes: a determining module 2203 configured to determine that the terminal stops sending the uplink positioning reference signal in case that the apparatus determines that the terminal moves from a first cell to a third cell. The first cell is a cell that allocates the configuration of the uplink positioning reference signal to the terminal, the first cell is a cell provided by the apparatus, and the third cell is a cell provided by a third network device.

In an optional design, the apparatus further includes: a determining module 2203 configured to determine that the terminal stops sending the uplink positioning reference signal in case that the apparatus determines that the uplink positioning reference signal sent by the terminal is not received within a preset duration.

In an optional design, the apparatus adopts a CU-DU separation architecture; the sending module 2201 is configured to: send the notification information to a CU of the apparatus in case that a DU of the apparatus determines that the terminal stops sending the uplink positioning reference signal; and the CU of the apparatus sends the notification information to the second network device.

In an optional design, the configuration of the uplink positioning reference signal is configured by the DU of the apparatus to the terminal; and the apparatus further includes: a release module 2202 configured to release the configuration of the uplink positioning reference signal by the DU of the apparatus in case that the DU of the apparatus determines that the terminal stops sending the uplink positioning reference signal.

In an optional design, the notification information sent by the DU of the apparatus to the CU of the apparatus is included in an F1AP message.

In an optional design, the notification information includes at least one of the following information:
information for indicating a positioning process of the terminal;
information for identifying an ongoing positioning measurement; and
information for indicating a stop of positioning.

In an optional design, the sending module 2201 is configured to: send monitoring information to the second network device. The monitoring information is information for monitoring a stop of measuring the uplink positioning reference signal.

In an optional design, the monitoring information includes at least one of:
a TA timer;
a release timer; and
a measurement stop timer.

In an optional design, the apparatus is a first base station and the second network device is a LMF network element; the monitoring information is included in a positioning information feedback message, and the positioning information feedback message is sent by the first base station in response to a positioning information request message sent by the LMF network element.

In an optional design, the monitoring information is forwarded by the LMF network element to at least one second base station, the second base station is a base station participating in measuring the uplink positioning reference signal sent by the terminal, and the monitoring information is used to enable the second base station to determine whether to stop measuring the uplink positioning reference signal.

In an optional design, the monitoring information is included in a measurement request message.

In an optional design, the uplink positioning reference signal is a SRS.

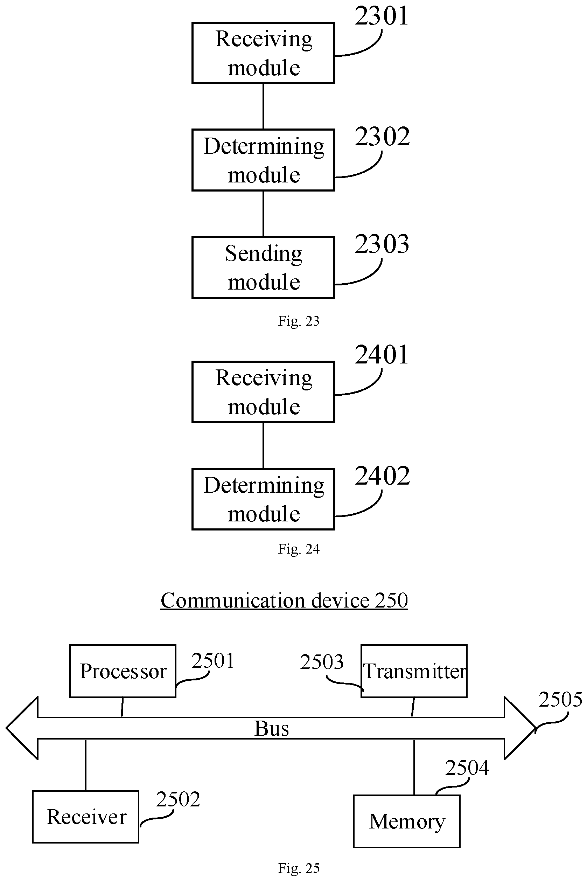

Fig. 23 shows a block diagram of an apparatus for stopping positioning a terminal according to an illustrative embodiment of the present disclosure. As shown in Fig. 23, the apparatus includes: a receiving module 2301 configured to receive notification information sent by a first network device; and a determining module 2302 configured to decide to stop positioning the terminal according to the notification information. The notification information is sent by the first network device in case that the first network device determines that the terminal stops sending an uplink positioning reference signal.

In an optional design, the notification information is included in a NRPPa message.

In an optional design, the first network device adopts a CU-DU separation architecture; and the receiving module 2301 is configured to: receive the notification information sent by a CU of the first network device.

In an optional design, the notification information includes at least one of the following information:
information for indicating a positioning process of the terminal;
information for identifying an ongoing positioning measurement; and
information for indicating a stop of positioning.

In an optional design, the apparatus further includes: a sending module 2303 configured to send a measurement stop message to at least one second base station according to the notification information. The second base station is a base station participating in measuring the uplink positioning reference signal sent by the terminal, and the measurement stop message is used to instruct the second base station to stop measuring the uplink positioning reference signal.

In an optional design, the receiving module 2301 is configured to: receive monitoring information sent by the first network device. The monitoring information is information for monitoring a stop of measuring the uplink positioning reference signal.

In an optional design, the monitoring information includes at least one of:
a TA timer;
a release timer; and
a measurement stop timer.

In an optional design, the monitoring information is included in a positioning information feedback message, and the positioning information feedback message is sent by the first network device in response to a positioning information request message sent by the apparatus.

In an optional design, the apparatus further includes: a sending module 2303 configured to send the monitoring information to at least one second base station. The second base station is a base station participating in measuring the uplink positioning reference signal sent by the terminal, and the monitoring information is used to enable the second base station to determine whether to stop measuring the uplink positioning reference signal.

In an optional design, the monitoring information is included in a measurement request message.

In an optional design, the uplink positioning reference signal is a SRS.

Fig. 24 shows a block diagram of an apparatus for stopping positioning a terminal according to an illustrative embodiment of the present disclosure. As shown in Fig. 24, the apparatus includes: a receiving module 2401 configured to receive a message for deciding to stop measuring an uplink positioning reference signal sent by the terminal.

In an optional design, the receiving module 2401 is configured to: receive a measurement stop message sent by a LMF network element. The measurement stop message is used to instruct the apparatus to stop measuring the uplink positioning reference signal sent by the terminal, the measurement stop message is sent by the LMF network element according to notification information sent by a first network device, the notification information is sent by the first network device in case that the first network device determines that the terminal stops sending the uplink positioning reference signal, and the apparatus is a base station participating in measuring the uplink positioning reference signal sent by the terminal.

In an optional design, the apparatus further includes: a receiving module 2401 configured to receive notification information sent by a first network device; and a determining module 2402 configured to decide to stop measuring the uplink positioning reference signal according to the notification information. The notification information is sent by the first network device in case that the first network device determines that the terminal stops sending the uplink positioning reference signal, and the apparatus is a base station participating in measuring the uplink positioning reference signal sent by the terminal.

In an optional design, the notification information is included in an XnAP message.

In an optional design, the notification information includes at least one of the following information:
information for indicating a positioning process of the terminal;
information for identifying an ongoing positioning measurement; and
information for indicating a stop of positioning.

In an optional design, the apparatus further includes: a receiving module 2401 configured to receive monitoring information sent by the LMF network element; and a determining module 2402 configured to determine whether to stop measuring the uplink positioning reference signal according to the monitoring information. The monitoring information is sent by the first network device to the LMF network element.

In an optional design, the monitoring information includes at least one of:
a TA timer;
a release timer; and
a measurement stop timer.

In an optional design, the monitoring information is included in a measurement request message.

In an optional design, the uplink positioning reference signal is a SRS.

It should be noted that when the apparatuses according to the above embodiments realize their functions, the division of the above functional modules is only taken as an example. In practical application, the above functions may be allocated to different functional modules to be completed according to actual needs, that is, the content structure of the apparatus is divided into different functional modules to complete all or part of the above functions.

With regard to the apparatuses in the above embodiments, the specific way in which each module performs operations has been described in detail in the embodiments of the relevant methods, and will not be described in detail here.

Fig. 25 shows a schematic diagram of a communication device (terminal or network device) according to an illustrative embodiment of the present disclosure. The communication device 250 includes a processor 2501, a receiver 2502, a transmitter 2503, a memory 2504 and a bus 2505.

The processor 2501 includes one or more processing cores, and the processor 2501 executes various functional applications and information processing by running software programs and modules.

The receiver 2502 and the transmitter 2503 may be realized as a communication component, which may be a communication chip.

The memory 2504 is connected to the processor 2501 through the bus 2505.

The memory 2504 may be used to store at least one instruction, and the processor 2501 is used to execute the at least one instruction, so as to realize the steps in the above method embodiments.

In addition, the memory 2504 may be realized by any type of volatile or nonvolatile memory devices or their combinations, including but not limited to a magnetic disk or an optical disk, an electrically erasable programmable read only memory (EEPROM), an erasable programmable read only memory (EPROM), a static random access memory (SRAM), a read-only memory (ROM), a magnetic memory, a flash memory, a programmable read-only memory (PROM).

When the communication device is implemented as a terminal, the processor and the transceiver in the communication device related to the embodiment of the present disclosure may be implemented as a communication chip together, or the transceiver may be formed as a communication chip separately. The transmitter in the transceiver executes the sending steps executed by the terminal in any one of the above methods, the receiver in the transceiver executes the receiving steps executed by the terminal in any one of the above methods, and the processor executes the steps other than the sending and receiving steps, which will not be repeated here.

When the communication device is implemented as a network device (access network device or core network device), the processor and the transceiver in the communication device related to the embodiment of the present disclosure may be implemented as a communication chip together, or the transceiver may be formed as a communication chip separately. The transmitter in the transceiver executes the sending steps executed by the network device in any one of the above methods, the receiver in the transceiver executes the receiving steps executed by the network device in any one of the above methods, and the processor executes the steps other than the sending and receiving steps, which will not be repeated here.

In an illustrative embodiment, a computer-readable storage medium is also provided, in which at least one instruction, at least one program, a code set or an instruction set is stored, and the at least one instruction, the at least one program, the code set or the instruction set is loaded and executed by the processor to realize the methods for stopping positioning the terminal according to the above method embodiments.

In an illustrative embodiment, a chip is also provided, which includes a programmable logic circuit and/or program instructions, and the chip is configured to, when running on a communication device, realize the methods for stopping positioning the terminal according to the above method embodiments.

In an illustrative embodiment, a computer program product is also provided, which, when running on a processor of a computer device, causes the computer device to perform the above methods for stopping positioning the terminal.

Those skilled in the art should realize that in one or more of the above examples, the functions described in the embodiments of the present disclosure may be realized by hardware, software, firmware or any combination thereof. When implemented in software, these functions may be stored in a computer-readable medium or transmitted as one or more instructions or codes on the computer-readable medium. The computer-readable medium includes a computer storage medium and a communication medium, and the communication medium includes any medium adapted to transfer computer programs from one place to another. The storage medium may be any available medium that may be accessed by a general-purpose or special-purpose computer.

The above description only relates to illustrative embodiments of the present disclosure, and is not intended to limit the present disclosure. Any modification, equivalent substitution, improvement, etc. made within the spirit and principle of the present disclosure should be included in the protection scope of the present disclosure.

## Claims

1. A method for stopping positioning a terminal, performed by a first network device, and comprising:
sending notification information to a second network device, in case that the first network device determines that the terminal stops sending an uplink positioning reference signal,
wherein the notification information is configured to enable the second network device to decide to stop positioning the terminal.

2. The method according to claim 1, wherein the first network device is a first base station and the second network device is a location management function (LMF) network element.

3. The method according to claim 2, wherein the notification information is comprised in a new radio positioning protocol A (NRPPa) message.

4. The method according to claim 2, wherein the notification information is configured for the LMF network element to decide to send a measurement stop message to at least one second base station,
wherein the second base station is a base station participating in measuring the uplink positioning reference signal sent by the terminal, and the measurement stop message is configured to instruct the second base station to stop measuring the uplink positioning reference signal.

5. The method according to claim 1, wherein the first network device is a first base station, the second network device comprises at least one second base station, and the second base station is a base station participating in measuring the uplink positioning reference signal sent by the terminal.

6. The method according to claim 5, wherein the notification information is comprised in an Xn application protocol (XnAP) message.

7. The method according to claim 1, wherein a configuration of the uplink positioning reference signal is configured by the first network device to the terminal, and the method further comprises:
releasing the configuration of the uplink positioning reference signal, in case that the first network device determines that the terminal stops sending the uplink positioning reference signal.

8. The method according to claim 1, further comprising:
determining that the terminal stops sending the uplink positioning reference signal, in case that the first network device determines that the terminal moves from a first cell to a second cell,
wherein the first cell is a cell that allocates a configuration of the uplink positioning reference signal to the terminal, and the first cell and the second cell are cells provided by the first network device.

9. The method according to claim 1, further comprising:
determining that the terminal stops sending the uplink positioning reference signal, in case that the first network device determines that the terminal moves from a first cell to a third cell,
wherein the first cell is a cell that allocates a configuration of the uplink positioning reference signal to the terminal, the first cell is a cell provided by the first network device, and the third cell is a cell provided by a third network device.

10. The method according to claim 1, further comprising:
determining that the terminal stops sending the uplink positioning reference signal in case that the first network device determines that the uplink positioning reference signal sent by the terminal is not received within a preset duration.

11. The method according to claim 1, wherein the first network device adopts a central unit (CU)-distributed unit (DU) separation architecture; and in case that the first network device determines that the terminal stops sending the uplink positioning reference signal, sending the notification information to the second network device comprises:
sending by a DU of the first network device the notification information to a CU of the first network device, in case that the DU of the first network device determines that the terminal stops sending the uplink positioning reference signal; and
sending by the CU of the first network device the notification information to the second network device.

12. The method according to claim 11, wherein a configuration of the uplink positioning reference signal is configured by the DU of the first network device to the terminal; and the method further comprises:
in case that the DU of the first network device determines that the terminal stops sending the uplink positioning reference signal, releasing by the DU of the first network device the configuration of the uplink positioning reference signal.

13. The method according to claim 11, wherein the notification information sent by the DU of the first network device to the CU of the first network device is comprised in an F1 application protocol (F1AP) message.

14. The method according to any one of claims 1-13, wherein the notification information comprises at least one of the following information:
information for indicating a positioning process of the terminal;
information for identifying an ongoing positioning measurement; and
information for indicating a stop of positioning.

15. The method according to any one of claims 1-13, further comprising:
sending monitoring information to the second network device,
wherein the monitoring information is information for monitoring a stop of measuring the uplink positioning reference signal.

16. The method according to claim 15, wherein the monitoring information comprises at least one of:
a time alignment (TA) timer;
a release timer; and
a measurement stop timer.

17. The method according to claim 15, wherein the first network device is a first base station and the second network device is a LMF network element; and
the monitoring information is comprised in a positioning information feedback message, and the positioning information feedback message is sent by the first base station in response to a positioning information request message sent by the LMF network element.

18. The method according to claim 17, wherein the monitoring information is forwarded by the LMF network element to at least one second base station, the second base station is a base station participating in measuring the uplink positioning reference signal sent by the terminal, and the monitoring information is configured to enable the second base station to determine whether to stop measuring the uplink positioning reference signal.

19. The method according to claim 18, wherein the monitoring information is comprised in a measurement request message.

20. The method according to any one of claims 1-13, wherein the uplink positioning reference signal is a sounding reference signal (SRS).

21. A method for stopping positioning a terminal, performed by a LMF network element, and comprising:
receiving notification information sent by a first network device; and
deciding to stop positioning the terminal according to the notification information,
wherein the notification information is sent by the first network device, in case that the first network device determines that the terminal stops sending an uplink positioning reference signal.

22. The method according to claim 21, wherein the notification information is comprised in a NRPPa message.

23. The method according to claim 21, wherein the first network device adopts a CU-DU separation architecture; and receiving the notification information sent by the first network device comprises:
receiving the notification information sent by a CU of the first network device.

24. The method according to any one of claims 21-23, wherein the notification information comprises at least one of the following information:
information for indicating a positioning process of the terminal;
information for identifying an ongoing positioning measurement; and
information for indicating a stop of positioning.

25. The method according to any one of claims 21-23, further comprising:
sending a measurement stop message to at least one second base station according to the notification information,
wherein the second base station is a base station participating in measuring the uplink positioning reference signal sent by the terminal, and the measurement stop message is configured to instruct the second base station to stop measuring the uplink positioning reference signal.

26. The method according to any one of claims 21-23, further comprising:
receiving monitoring information sent by the first network device,
wherein the monitoring information is information for monitoring a stop of measuring the uplink positioning reference signal.

27. The method according to claim 26, wherein the monitoring information comprises at least one of:
a TA timer;
a release timer; and
a measurement stop timer.

28. The method according to claim 26, wherein the monitoring information is comprised in a positioning information feedback message, and the positioning information feedback message is sent by the first network device in response to a positioning information request message sent by the LMF network element.

29. The method according to claim 26, further comprising:
sending the monitoring information to at least one second base station,
wherein the second base station is a base station participating in measuring the uplink positioning reference signal sent by the terminal, and the monitoring information is configured to enable the second base station to determine whether to stop measuring the uplink positioning reference signal.

30. The method according to claim 29, wherein the monitoring information is comprised in a measurement request message.

31. The method according to any one of claims 21-23, wherein the uplink positioning reference signal is a SRS.

32. A method for stopping positioning a terminal, performed by a second base station, and comprising:
receiving a message for deciding to stop measuring an uplink positioning reference signal sent by the terminal.

33. The method according to claim 32, wherein receiving the message for deciding to stop measuring the uplink positioning reference signal of the terminal comprises:
receiving a measurement stop message sent by a LMF network element,
wherein the measurement stop message is configured to instruct the second base station to stop measuring the uplink positioning reference signal sent by the terminal, the measurement stop message is sent by the LMF network element according to notification information sent by a first network device, the notification information is sent by the first network device in case that the first network device determines that the terminal stops sending the uplink positioning reference signal, and the second base station is a base station participating in measuring the uplink positioning reference signal sent by the terminal.

34. The method according to claim 32, wherein receiving the message for deciding to stop measuring the uplink positioning reference signal of the terminal comprises:
receiving notification information sent by a first network device; and
deciding to stop measuring the uplink positioning reference signal according to the notification information,
wherein the notification information is sent by the first network device in case that the first network device determines that the terminal stops sending the uplink positioning reference signal, and the second base station is a base station participating in measuring the uplink positioning reference signal sent by the terminal.

35. The method according to claim 34, wherein the notification information is comprised in an XnAP message.

36. The method according to any one of claims 33-35, wherein the notification information includes at least one of the following information:
information for indicating a positioning process of the terminal;
information for identifying an ongoing positioning measurement; and
information for indicating a stop of positioning.

37. The method according to any one of claims 32-35, further comprising:
receiving monitoring information sent by a LMF network element; and
determining whether to stop measuring the uplink positioning reference signal according to the monitoring information,
wherein the monitoring information is sent by a first network device to the LMF network element.

38. The method according to claim 37, wherein the monitoring information comprises at least one of:
a TA timer;
a release timer; and
a measurement stop timer.

39. The method according to claim 37, wherein the monitoring information is comprised in a measurement request message.

40. The method according to any one of claims 32-35, wherein the uplink positioning reference signal is a SRS.

41. An apparatus for stopping positioning a terminal, comprising:
a sending module configured to send notification information to a second network device in case that the apparatus determines that the terminal stops sending an uplink positioning reference signal,
wherein the notification information is configured to enable the second network device to decide to stop positioning the terminal.

42. An apparatus for stopping positioning a terminal, comprising:
a receiving module configured to receive notification information sent by a first network device; and
a determining module configured to decide to stop positioning the terminal according to the notification information,
wherein the notification information is sent by the first network device in case that the first network device determines that the terminal stops sending an uplink positioning reference signal.

43. An apparatus for stopping positioning a terminal, comprising:
a receiving module configured to receive a message for deciding to stop measuring an uplink positioning reference signal sent by the terminal.

44. A network device, comprising:
a processor;
a transceiver connected with the processor; and
a memory for storing instructions executable by the processor,
wherein the processor is configured to load and execute the executable instructions to realize a method for stopping positioning a terminal according to any one of claims 1-20, or claims 21-31, or claims 32-40.

45. A computer-readable storage medium, wherein executable instructions are stored in the readable storage medium, and the executable instructions are loaded and executed by a processor to realize a method for stopping positioning a terminal according to any one of claims 1-40.

46. A chip, comprising a programmable logic circuit or a program, wherein the chip is configured to realize a method for stopping positioning a terminal according to any one of claims 1-40.
